(19) Europäisches Patentamt / European Patent Office / Office européen des brevets

(11) **EP 4 390 827 A1**

(12) **EUROPEAN PATENT APPLICATION**
published in accordance with Art. 153(4) EPC

(43) Date of publication:
**26.06.2024 Bulletin 2024/26**

(21) Application number: **22858047.8**

(22) Date of filing: **01.02.2022**

(51) International Patent Classification (IPC):
**G06Q 50/10** $^{(2012.01)}$        **G06N 10/00** $^{(2022.01)}$

(52) Cooperative Patent Classification (CPC):
**G06N 10/00; G06Q 50/10**

(86) International application number:
**PCT/JP2022/003885**

(87) International publication number:
**WO 2023/021722 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.08.2021 JP 2021132823**

(71) Applicant: **Hitachi, Ltd.**
**Tokyo 100-8280 (JP)**

(72) Inventors:
• **KANNO Yusuke**
  **Tokyo 100-8280 (JP)**
• **MIZUNO Hiroyuki**
  **Tokyo 100-8280 (JP)**
• **YOSHIMURA Chihiro**
  **Tokyo 100-8280 (JP)**

(74) Representative: **Mewburn Ellis LLP**
**Aurora Building**
**Counterslip**
**Bristol BS1 6BX (GB)**

(54) **QUANTUM COMPUTER SYSTEM AND METHOD FOR OPERATING QUANTUM COMPUTER SYSTEM**

(57)    A quantum computer system includes: a virtual quantum computer that simulates an operation of an actual quantum computer that executes a quantum operation using a quantum bit group based on a predetermined parameter; and a control device that controls the actual quantum computer and the virtual quantum computer, wherein the virtual quantum computer includes an estimation unit that estimates a state of a target quantum bit in the quantum bit group by simulating the operation of the actual quantum computer, and the control device includes a feedback control unit that changes the parameter and transmits the changed parameter to the virtual quantum computer until a deviation between an estimation state of the target quantum bit by the estimation unit and a quantum operation result from the actual quantum computer becomes a first design value or less.

## FIG. 1

**Description**

The present application claims priority to Japanese Patent Application No. 2021-132823 filed on August 17, 2021, the contents of which are incorporated herein by reference.

Technical Field

The present invention relates to a quantum computer system that operates a quantum computer and an operation method thereof.

Background Art

The development of quantum computers has accelerated worldwide, particularly the development of gate-type quantum computers. A current mainstream system is a superconducting type, and a quantum computer of about 50 Qubit is in practical use. In addition, expectations for quantum computers are increasing, for example, quantum supremacy has been shown as an indicator indicating the superiority of quantum computers (see NPL 1). In addition, a quantum computer has a problem of low fault tolerance of a quantum bit, and a technique for correcting an error of a quantum bit has also been developed (see NPL 2).

However, the surface code technology described in NPL 2 requires a large number of quantum bits for error correction, and further, it is necessary to perform multistage quantum operations. Therefore, application of the surface code technology to present quantum computers of about 50 quantum bits is very difficult. Under such a background, in the development of a quantum computer, a concept of a medium-scale quantum computer (noisy intermediate-scale quantum (NISQ) computer) in which error correction is not complete and an influence of noise is allowed has been proposed (see NPL 3), and the development thereof has advanced.

Citation List

Non Patent Literature

NPL 1: Frank Arute et al., "Quantum supremacy using a programmable superconducting processor," Nature, Vol 574, pp, 505-510, No. 24 Oct 2019

NPL 2: Austin G. Fowler, et al., "Surface codes: Towards practical large-scale quantum computation," 27 Oct 2012.

NPL 3: John Preskill, "Quantum Computing in the NISQ era and beyond," 31 Jul 2018.

NPL 4: D. M. Zajac, et al., "Quantum CNOT Gate for Spins in Silicon," Science (2017).

Summary of Invention

Technical Problem

The problem to be solved by the invention is a technique for avoiding low accuracy of quantum operation and a high operation error rate, which are also problems of a NISQ quantum computer. Unlike a classical computer, a quantum computer cannot directly observe and detect how much operation error has been integrated when performing a quantum operation. This is a requirement of quantum mechanics and is not a technical difficulty. Therefore, there is a need for a technique for enhancing operation accuracy without directly observing the operation result of the quantum bits.

As a conventional technique, as described above, it has been proposed to ascertain and correct a calculation error using a quantum error correction technique. However, there are problems such as a large hardware scale and a complicated implementation algorithm. In addition, in order to perform the calculation in the NISQ type, it is possible to take a measure such as terminating the calculation before the cumulative calculation error increases, but in this case, complicated quantum operation cannot be performed.

An object of the present invention is to obtain a highly accurate quantum calculation result at high speed and with high efficiency.

Solution to Problem

A quantum computer system according to one aspect of the invention disclosed in the present application includes: a virtual quantum computer that simulates an operation of an actual quantum computer that executes a quantum operation using a quantum bit group based on a predetermined parameter; and a control device that controls the actual quantum computer and the virtual quantum computer, wherein the virtual quantum computer includes an estimation unit that estimates a state of a target quantum bit in the quantum bit group by simulating the operation of the actual quantum computer, and the control device includes a feedback control unit that changes the parameter and transmits the changed parameter to the virtual quantum computer until a deviation between a state of the target quantum bit estimated by the estimation unit and a quantum operation result from the actual quantum computer becomes a first design value or less.

Advantageous Effects of Invention

According to the representative embodiment of the present invention, a highly accurate quantum calculation result can be acquired at high speed and with high efficiency. Problems, configurations, and effects other than those described above will be clarified by the following description of embodiments.

Brief Description of Drawings

[FIG. 1] FIG. 1 is a block diagram illustrating a first configuration example of a quantum computer system.
[FIG. 2] FIG. 2 is an explanatory diagram illustrating a second configuration example of the quantum computer system.
[FIG. 3] FIG. 3 is a block diagram illustrating a detailed configuration example of the quantum computer system illustrated in FIG. 1.
[FIG. 4] FIG. 4 is a block diagram illustrating a hardware configuration example of a quantum computer system.
[FIG. 5] FIG. 5 is an explanatory diagram illustrating an example of content stored in a third memory of a digital twin control device.
[FIG. 6] FIG. 6 is an explanatory diagram illustrating another example of the content stored in the third memory of the digital twin control device.
[FIG. 7] FIG. 7 is a block diagram illustrating a configuration example of a quantum bit array.
[FIG. 8] FIG. 8 is a flowchart illustrating an example of an adjustment processing procedure of a quantum bit control model by the quantum computer system.
[FIG. 9] FIG. 9 is a flowchart illustrating an example of a processing procedure of creating a quantum bit control model in consideration of variations in control of a single quantum bit and two quantum bits by a quantum computer system.
[FIG. 10] FIG. 10 is a flowchart illustrating an example of a processing procedure of creating a quantum bit control model including the influence of noise from the surroundings.
[FIG. 11] FIG. 11 is a flowchart illustrating a first digital twin operation processing procedure example.
[FIG. 12] FIG. 12 is a flowchart illustrating a second digital twin operation processing procedure example.
[FIG. 13] FIG. 13 is an explanatory diagram illustrating a display example of the digital twin operation.

Description of Embodiments

According to the principle of quantum mechanics, it is impossible to observe a state of a quantum bit in the middle of operation and without affecting the operation. Therefore, regarding the state of the quantum bit in the middle of operation, it is necessary to indirectly estimate the state of the quantum bit while monitoring a control parameter of the quantum bit and an environmental situation, instead of directly observing the quantum bit.

The control parameter that is one of monitoring targets is an ideal value of a control signal that controls the quantum bit, and specifically, is a set of values of parameters such as a voltage value, a current amount, and a phase and a delay in the case of an RF signal. Here, the control parameter is a controlled variable required to control the quantum bits. However, a deviation may occur between the control parameter and the controlled variable from the control circuit.

Here, the controlled variable from the control circuit is referred to as a "control signal parameter". The control signal parameter is a set value of each parameter at the time of transmitting the control signal from the control circuit. When the control parameter is a direct current (DC) value, the control parameter and the control signal parameter have substantially the same value. However, when the control parameter and the control signal parameter change with time due to transmission, a deviation such as a delay generally occurs between the control parameter and the control signal parameter. In addition, another environmental situation to be monitored is fluctuation of an ambient temperature or an applied magnetic field of a quantum bit and fluctuation of a power supply.

If it can be grasped that an amount of deviation from an ideal value (value of the control parameter) has increased by such an indirect method, the accuracy of operation can be evaluated, and if the amount of deviation can be corrected, the correction calculation is performed, which leads to improvement of the accuracy of quantum operation.

Sensor data from various sensors mounted inside an actual quantum computer is utilized for evaluation of the control parameters and the environmental conditions. For example, regarding the control parameter, sensor data (hereinafter, the control parameter first measurement value) detected by the control circuit and sensor data (hereinafter, the control parameter second measurement value) detected in the vicinity of the quantum bit are utilized. The control parameter first measurement value is a value close to the control signal parameter, and the control parameter second measurement value is a value close to the control parameter. In this way, the deviation between the control parameter and the control signal parameter becomes clear.

A superconducting quantum bit and a semiconductor-based electron spin quantum bit need to be operated at a very low temperature realized by a dilution refrigerator, and it may be difficult to integrate the control circuit and the quantum bit in a same cooling temperature space due to restrictions on the mounting of the refrigeration space in the dilution refrigerator. In this case, it is conceivable to control the quantum bit by dispersedly arranging the control circuit in a place having a relatively high temperature in the dilution refrigerator.

However, in that case, a value of the control signal parameter assumed in the control circuit may be different from a value of the control parameter actually applied to the quantum bit. In order to improve an accuracy of state estimation of the quantum bit, it is necessary to accurately grasp a control parameter applied to the quantum bit. In addition, as an environmental situation, there is a case where conditions such as a temperature, an external magnetic field, and a supply power source may fluctuate, and an influence of such fluctuation on the quantum bit operation cannot be ignored.

Therefore, it is desirable to monitor the environmental situation and calibrate the control parameter according to the variation amount. Furthermore, the accuracy of the quantum operation is improved by performing the correction calculation when the correction calculation is possible using each piece of sensor data.

Therefore, in order to improve an operation fidelity of the quantum bit, it is necessary to obtain a correlation between the control parameter (eventually, the control signal parameter) and the state of the quantum bit, estimate the state of the quantum bit of interest with high accuracy only by the simulation of the control parameter, and execute the correction operation as necessary.

In a normal simulation, an operation is simulated on the basis of an assumed scenario, but the digital twin of the quantum computer further utilizes a control parameter (eventually, a control signal parameter) that controls the quantum bit to quantitatively capture a deviation from an assumed scenario, and in particular, monitors the operation fidelity of a quantum bit of interest, thereby making it possible to appropriately correct the control of the quantum bit so as to bring the operation fidelity to a design value.

In order to estimate the operation fidelity of the quantum bit in real time, it is necessary to monitor the quality (variations in voltage value, current value, and phase and delay of RF signal) of the control parameter for the target quantum bit for which the quantum operation is executed and the sensing data of the surrounding environmental conditions, and further to evaluate the influence of noise on a non-target quantum bit that is not the operation target.

The quantum computer system according to the present embodiment described below grasps the states of all the quantum bits related to the quantum operation using these pieces of information, evaluates the deviation from the ideal operation state, and performs feedback to the actual quantum computer as necessary. As a result, the operation fidelity of the quantum bit is improved. As a method of using the operation result of the digital twin, the following (1) to (4) can be considered.

(1) The quantum computer system tunes the control parameters (eventually, the control signal parameters) and feeds back on the next identical quantum operation. Here, the quantum operation is assumed to be a primitive operation such as rotation (Rx) in an x direction. When tuning is performed, it is necessary to verify the operation result by measurement after performing the quantum operation. Since the control signal parameter is adjusted after the operation verification is performed, in this case, the calculation accuracy of the next identical quantum operation can be improved.

(2) The quantum computer system tunes the operation accuracy of each instruction and feeds back the next operation of a different quantum bit group. There is a difference that (2) is a complex quantum operation in which a plurality of primitive quantum operations are collected, while (1) is a primitive quantum operation. That is, (2) corresponds to tuning of the entire subprogram-like operation obtained by collecting some primitive operations of (1). In this case, the calculation accuracy of the next different quantum operation is improved.

(3) The quantum computer system tunes the control parameter in the middle of the quantum operation, and applies feedback to the remaining quantum operation. In this case, the quantum computer system adjusts the control signal parameter by correcting a difference between the control parameter and the control signal parameter or a change in the environmental situation. As a result, the decrease in the accuracy of the quantum operation caused by the deviation of the control parameter due to the change in the environmental situation is reduced, so that the accuracy is improved from the middle of the quantum operation.

(4) The quantum computer system tunes the control parameter (eventually, the control signal parameter) and performs correction calculation in the middle of the quantum operation to compensate for an integrated error in the quantum operation. In this case, since the error can be corrected during the execution of the quantum operation, the number of operation stages of the quantum operation can be increased, that is, more complicated quantum operation can be executed.

In general, a result of the quantum operation is rarely obtained by a one-shot operation, and a solution is often determined by generating an expected value of an obtained result as a result of a large number of iterative operations. Therefore, an identical operation needs to be repeated a plurality of times, and the operation accuracy is improved by the digital twin operation even in a case of obtaining a solution of the identical operation. Therefore, there is a chance of correction even in the identical operation.

Hereinafter, an embodiment according to the present invention will be described with reference to the drawings. However, the present invention is not to be construed as being limited to the description of the embodiments described below. Those skilled in the art can easily understand that the specific configuration can be changed without departing from the spirit or gist of the present invention.

In the configuration of the invention described below, the same reference numerals are commonly used for the same portions or portions having similar functions in different drawings, and redundant description may be omitted. In the embodiment, in a case where there is a plurality of components that can be regarded as equivalent, the same symbol or number may be added with a suffix to be distinguished. However, in a case where it is not particularly necessary to distinguish, the description may be omitted.

Notations such as "first", "second", and "third" in the present specification and the like are attached to identify components, and do not necessarily limit the number or order. In addition, a number for identifying a component is used for each context, and a number used in one context does not necessarily indicate the same configuration in another context. In addition, it does not prevent a component identified by a certain number from also functioning as a component identified by another number.

Positions, sizes, shapes, ranges, and the like of the respective components illustrated in the drawings and the like may not represent actual positions, sizes, shapes, ranges, and the like in order to facilitate understanding of the invention. Therefore, the present invention is not necessarily limited to the position, size, shape, range, and the like disclosed in the drawings and the like.

<Configuration Example of Quantum Computer System>

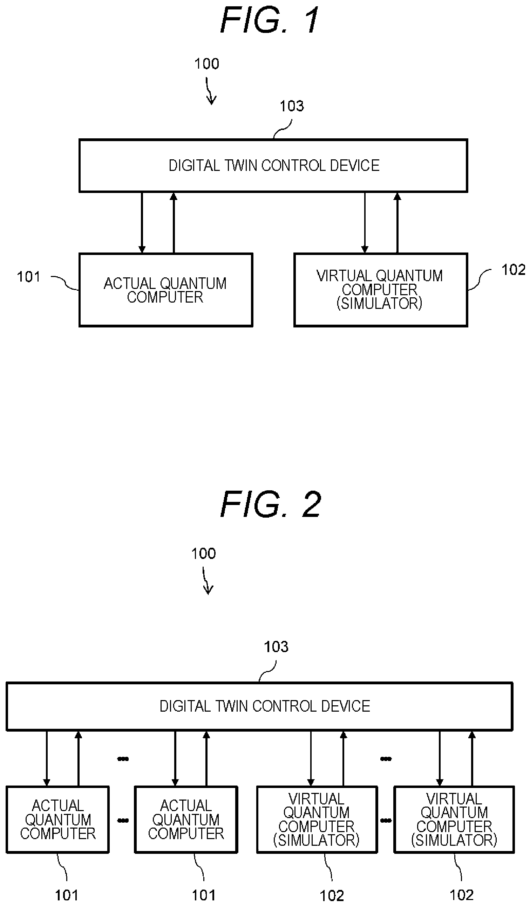

FIG. 1 is a block diagram illustrating a first configuration example of the quantum computer system. The basic concept is a realization of a digital twin in a quantum computer. A quantum computer system 100 includes an actual quantum computer 101, a virtual quantum computer 102, and a digital twin control device 103.

The actual quantum computer 101 executes quantum operation. The actual quantum computer 101 is, for example, a NISQ quantum computer. The virtual quantum computer 102 is a digital twin of the actual quantum computer 101, and evaluates an operation state of the actual quantum computer 101 by simulation. The digital twin control device 103 controls each of the actual quantum computer 101 and the virtual quantum computer 102.

The quantum computer system 100 simulates the quantum operation in the actual quantum computer 101 in parallel with the execution of the quantum operation by the virtual quantum computer 102, and executes correction of the operation and readjustment of the control parameter (specifically, the control signal parameter) when the operation errors are accumulated as a result of the simulation. This improves the operation accuracy of the quantum calculation.

FIG. 2 is an explanatory diagram illustrating a second configuration example of the quantum computer system 100. The difference from FIG. 1 is that there are a plurality of actual quantum computers 101 and virtual quantum computers 102. For example, in a case where the actual quantum computer 101 is of a superconducting type or an electron spin type, when one actual quantum computer 101 is configured for one dilution refrigerator, each of actual quantum computer 101 is defined for each dilution refrigerator.

Furthermore, in a case where a quantum bit array of independent operation is incorporated on one semiconductor LSI like a silicon electron spin type, each quantum bit array unit can be regarded as the actual quantum computer 101. The virtual quantum computer 102 is a simulator constructed on a classical computer, and can be constructed not only on one classical computer but also arranged in a distributed manner via a network. In the following description, in order to simplify the description, the description will be made using the quantum computer system 100 illustrated in FIG. 1.

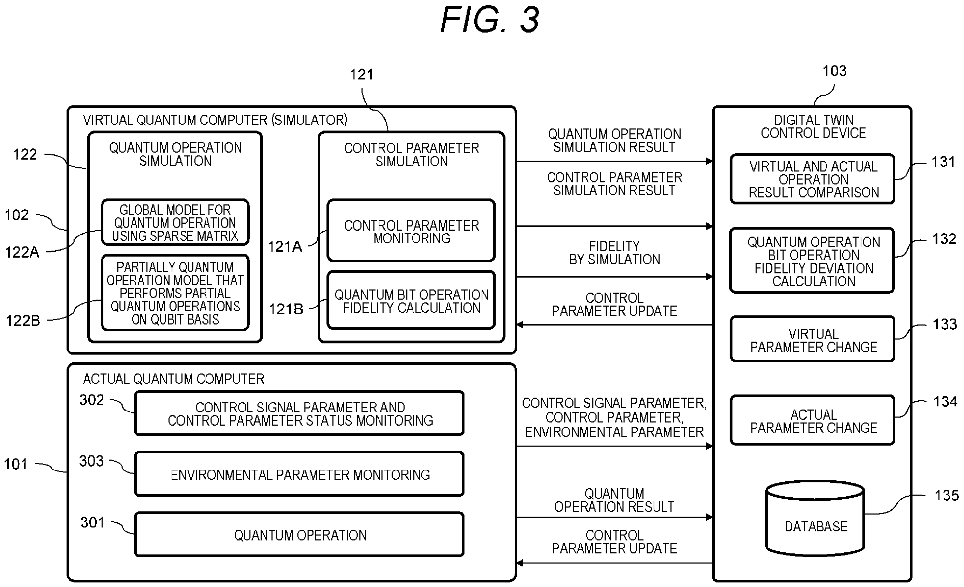

FIG. 3 is a block diagram illustrating a detailed configuration example of the quantum computer system 100 illustrated in FIG. 1. The actual quantum computer 101 executes a quantum operation 301, a control signal parameter and control parameter status monitoring 302, and an environmental parameter monitoring 303.

Specifically, for example, the actual quantum computer 101 executes the quantum operation 301 to be subjected to quantitative evaluation, and outputs the quantum operation result to the digital twin control device 103.

In addition, in the control signal parameter and control parameter status monitoring 302, the actual quantum computer 101 monitors the control signal parameter and the control parameter such as each value of the voltage, the current, and the RF signal, and outputs the control signal parameter and the control parameter to the digital twin control device 103. This makes it possible to estimate the behavior of the quantum operation 301 of the quantum bit. Regarding the influence of the control signal parameter and the control parameter on the quantum bit, it is possible to improve the accuracy of estimation by performing an experiment in advance and acquiring a correlation. At that time, environmental factors also have an influence.

In addition, the actual quantum computer 101 monitors the environmental conditions such as temperature and electromagnetic wave intensity by various sensors by the environmental parameter monitoring 303, and outputs detected sensing data to the digital twin control device 103 as environmental parameters.

The virtual quantum computer 102 estimates the quantum bit state of the actual quantum computer 101 by executing a control parameter simulation 121 regarding the influence of the control parameter on the quantum bit and a quantum operation simulation 122. The virtual quantum computer 102 executes simulation of control parameters. The actual quantum computer 101 controls the control signal parameter, and it is the adjustment of the control signal parameter to control the control parameter to a more ideal state. The virtual quantum computer 102 models the relationship between the control parameter and the control signal parameter. As a result, the virtual quantum computer 102 can also perform simulation with the control signal parameter. Hereinafter, the simulation using the control parameter will be described.

The control parameter simulation 121 executes a control parameter monitoring 121A and executes a quantum bit operation fidelity calculation 121B. The quantum bit operation fidelity calculation 121B is calculation processing of evaluating the influence of the combination of the control parameters of the quantum bits on the operation state of the quantum bits as the fidelity of the quantum operation, for example.

It is difficult to make the quantum operation simulation 122 the same scale as the actual quantum computer 101. Therefore, for example, the quantum operation simulation 122 desirably has a function of globally tracing a quantum operation and a function of simulating a part of interest in detail. For example, it is effective that the quantum operation simulation 122 can selectively select a method such as using a global model for quantum operation using sparse matrix 122A that performs an arithmetic matrix of a global quantum operation as sparse and a partially quantum operation model that performs partial quantum operations on a qubit basis 122B that performs a partial quantum operation in detail with a bit operation.

The digital twin control device 103 acquires the quantum operation result from the actual quantum computer 101, the value of the control signal parameter (a set value of the control signal in the control circuit (for example, a first sequencer 411 to be described below) for controlling the quantum bits or sensing data thereof), and the value of the control parameter (sensing data immediately before application to the quantum bit). In addition, the digital twin control device 103 acquires the quantum operation simulation result, the control parameter simulation result, and the operation fidelity by the simulation from the virtual quantum computer 102.

The digital twin control device 103 executes operation result comparison (hereinafter, "virtual and actual operation result comparison") 131 between the actual quantum computer 101 and the virtual quantum computer 102 using the data acquired from the actual quantum computer 101 and the data acquired from the virtual quantum computer 102, and executes a deviation calculation 132 of calculation fidelity of the quantum bit.

Various definitions are known for the operation fidelity of the quantum bits. Here, for example, in a case where a quantum state $|\varphi_{before}>$ before operation is considered, assuming that an ideal quantum state after the quantum operation is $|\varphi_{after\_ideal}>$ and an actual quantum state after the quantum operation is $|\varphi_{after\_real}>$, the fidelity can be a magnitude of an inner product of both states. That is, $|<\varphi_{after\_real}|\varphi_{after\_ideal}>|$. When the operation fidelity is "1", it indicates that the actual quantum state matches the ideal state (there is no deviation), and as the operation fidelity is lower than "1", that is, as the deviation amount (1-operation fidelity) is larger, it indicates that the actual quantum state deviates from the ideal state.

In a case where the deviation amount of the operation fidelity of the quantum bit becomes larger than a threshold value, the digital twin control device 103 executes a virtual parameter change 133 of the virtual quantum computer 102 or an actual machine parameter change 134 of the actual quantum computer 101.

In the virtual parameter change 133 and the actual machine parameter change 134, the digital twin control device 103 determines the change amount of the control signal parameter using a reference table set in advance from the relationship between the operation result of the actual quantum computer 101, the operation result of the virtual quantum computer 102, and the control signal parameter. It is desirable that the digital twin control device 103 holds such an evaluation result as a database 135. By utilizing this data, there is an effect that adjustment of the calculation of the quantum bit becomes easy with future system improvement.

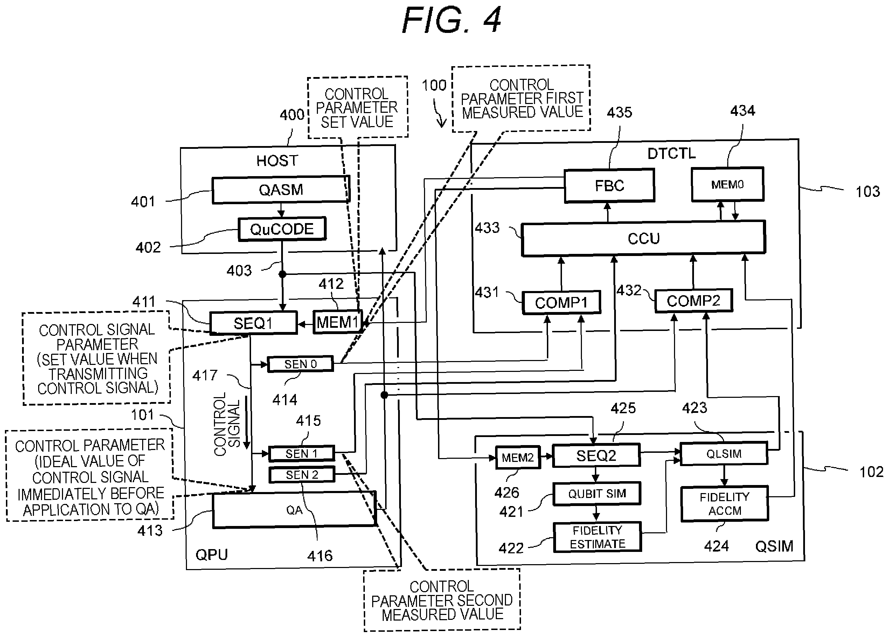

FIG. 4 is a block diagram illustrating a hardware configuration example of the quantum computer system 100. The quantum computer system 100 includes an actual quantum computer (QPU) 101, a virtual quantum computer (QSIM) 102, a digital twin control device (DTCTL) 103, and a host computer (HOST) 400. The host computer 400 is a classical computer including a processor and a memory. The virtual quantum computer 102 and the digital twin control device 103 may be implemented by a classical computer. In addition, at least two of the host computer 400, the virtual quantum computer 102, and the digital twin control device 103 may be mounted on the same classical computer.

In the host computer 400, a quantum program described in a quantum assembler (QASM) 401 is converted into a quantum microcode (QuCODE) 402 which is a hardware control language of the quantum computer, and is input to the actual quantum computer 101 and the virtual quantum computer 102.

The actual quantum computer 101 converts the received quantum microcode 402 into a program for quantum bit control and stores the program in the first sequencer (SEQ1) 411. The first sequencer 411 is connected to a first memory (MEM1) 412, and design values (hereinafter, a control parameter setting value) of a voltage, a current, timing, and an RF signal are held in the first memory 412.

The control signal parameter from the first sequencer 411 to a quantum bit array (QA) 413 is transmitted as an analog signal via a DA converter or an RF oscillation circuit (not illustrated). The control signal parameter is a set value at the time of transmission of the control signal transmitted from the first sequencer 411 to the quantum bit array 413 through a signal line 417 based on the control parameter setting value stored in the first memory 412. When an instruction sequence of the microcode is executed, the first sequencer 411 outputs an appropriate signal waveform to the quantum bit array 413 using the control parameter setting value stored in the first memory 412.

The actual quantum computer 101 includes a sensor (SEN0) 414 and a sensor (SEN1) 415 that detect the voltage, current, timing, and frequency of the control signal issued from the first sequencer 411. The sensor data when the control signal is detected by the sensor (SEN0) 414 is the above-described control parameter first measurement value, and the sensor data when the control signal is detected by the sensor (SEN1) 415 is the above-described control parameter second measurement value.

A superconducting or electron spin quantum computer needs to cool a quantum bit to a cryogenic temperature (<100 mK), but this cryogenic temperature needs to be generated by a dilution refrigerator, and the cooling performance of the dilution refrigerator determines the restriction of heat generation to the quantum bit array 413. As the temperature decreases, the required cooling capacity needs to be strong, while the amount of heat that can be cooled tends to decrease.

An analog circuit that generates an RF signal and generates a voltage and a current is essential for controlling the quantum bit, but heat generation of these analog circuits is very large. Therefore, it is often difficult to install such an analog circuit in the vicinity of the quantum bit array 413. Therefore, the control circuit of the quantum bits such as the first sequencer 411 is desirably installed in a temperature region where the temperature is relatively high (for example, about 4K), and in this case, a physical distance to the quantum bit array 413 becomes large.

As the physical distance becomes longer, a signal integrity is lowered, and there is a high possibility that the control on the quantum bit does not work as expected. Therefore, it is desirable to measure the control parameter in the vicinity of the quantum bit and utilize the data (however, a deviation occurs between the control signal parameter and the control parameter). Therefore, in the present embodiment, the sensor 414 is installed at a position closer to the first sequencer 411 than the quantum bit array 413, and outputs the control parameter first measurement value. In addition, the sensor 415 is installed at a position closer to the quantum bit array 413 than the sensor 414, and outputs the control parameter second measurement value.

In addition, it is advantageous to mount a sensor (SEN2) 416 for measuring the influence of the environment on the actual quantum computer 101. Sensors of temperature and applied magnetic fields are conceivable. Such sensing data of the sensor 416 is also important for correction of quantum bit control.

Note that observation of the control parameters near the quantum bit array 413 may give unintended kickback control to the quantum bits. In that case, during the execution of the quantum operation 301, it is desirable to perform control to turn off the sensors 415 and 416 in the vicinity of the quantum bit array 413. However, even in such a case, it is desirable that the sensors 415 and 416 in the vicinity of the quantum bit array 413 is appropriately operated and the signal can be dynamically calibrated when the quantum operation 301 is not executed.

The virtual quantum computer 102 is configured by a classical computer, and includes a quantum bit simulation execution unit (QUBIT SIM) 421, an evaluation unit (FIDELITY ESTIMATE) 422, a quantum logic simulation execution unit (QLSIM) 423, and an operation fidelity integration unit (FIDELITY ACCM) 424 as functions. These functions are implemented by causing a processor to execute a program.

The quantum bit simulation execution unit 421 executes the control parameter simulation 121. Specifically, for example, the quantum bit simulation execution unit 421 simulates the state of the quantum bit from the control parameters transmitted by a signal line 403 for decoding the quantum microcode 402 and the signal line 417 of the quantum bit array 413. The control signal parameter from the signal line 403 for decoding the quantum microcode 402 is input to the quantum bit simulation execution unit 421 via a second sequencer 425.

The evaluation unit 422 calculates the operation fidelity by the deviation calculation 132 of the operation fidelity of the quantum bits, and calculates the deviation amount of the operation fidelity of the quantum bits from the ideal state obtained from the simulation result of the quantum bit simulation execution unit 421.

The quantum logic simulation execution unit 423 advances the operation sequence of the quantum bit array 413 to simulate the quantum operation 301 for each sequence.

The calculation fidelity integration unit 424 integrates the deviation amount of the calculation fidelity when performing the quantum operation 301. Since the fidelity is calculated a plurality of times, the calculation fidelity integration unit 424 integrates the deviation amount of the calculation fidelity. The integrated operation fidelity deviation amount is stored in a third memory 434 by a correction amount calculation unit 433.

There are two systems of output from the second sequencer (SEQ 2) 425 in the virtual quantum computer 102. One is an output to the quantum logic simulation execution unit 423, and the other is an output to the quantum bit simulation execution unit 421. The quantum logic simulation execution unit 423 digitally executes a logical simulation of a quantum bit, and the quantum bit simulation execution unit 421 simulates a state of each quantum bit.

The quantum logic simulation execution unit 423 digitally executes a logical simulation of a quantum bit, and the quantum bit simulation execution unit 421 simulates a state of each quantum bit. As for the simulation of the quantum bit simulation execution unit 421, a case of performing in an analog manner or a case of performing in a digital manner can be considered. For the analog simulation, alternating current (AC) analysis and transition analysis of electromagnetic waves, voltages, and currents are desirable. However, these simulations are relatively time-consuming.

Therefore, after grasping the relationship between the control signal parameter and the control parameter, the quantum logic simulation execution unit 423 generates a learning model in which the correlation between the control parameter and the quantum bit state (spin direction of one quantum bit) is modeled. This learning model is defined as a function that obtains a state of the quantum bit when a control parameter is input. In order to create this learning model, it is effective to construct an actual quantum bit state by machine learning using big data of many experimental results.

The digital twin control device 103 includes a first comparison unit (COMP1) 431, a second comparison unit (COMP2) 432, a correction calculation unit (CCU) 433, a third memory (MEMO) 434, and a feedback control unit (FBC) 435.

The first comparison unit 431 compares the control parameter first measurement value (voltage value, current value, RF frequency, and control timing) output from the first sequencer 411 and detected by the sensor 414 with the control parameter second measurement value (voltage value, current value, RF frequency, and control timing) detected by the sensor 415 in the vicinity of the quantum bit array 413.

In the simplest example, the first comparison unit 431 compares the control parameter first measurement value with the control parameter second measurement value (the comparison result is assumed to be 1A). At this time, if the control parameter design value is also stored in the first memory 412 or the like, the control parameter design value can also be read, and the magnitude of the read control parameter design value and the control parameter second measurement value can also be compared. (the comparison result is assumed to be 1B). By also using the comparison result 1B, the error amount in control can be grasped, and the correction amount can be appropriately set. Using both the comparison results 1A and 1B thus obtained, the correction amount calculation unit (CCU) 433 calculates the amount of change in the value of the control signal parameter. Based on this calculation result, feedback control to the actual quantum computer 101 and the virtual quantum computer 102 is executed. Hereinafter, an example using the comparison result 1A will be described in detail.

The first comparison unit 431 compares the control parameter second measurement value with the control parameter design value according to the wiring length and the temperature of the signal line 417, and calculates the deviation amount as the comparison result 1A. In response to the comparison result 1A, the correction amount calculation unit (CCU) 433 sets a correction value of the control signal parameter necessary for the control parameter to become a value (here, a control parameter design value) that generates a state of high operation fidelity. Specifically, for example, the correction amount calculation unit (CCU) 433 performs correction so that the deviation amount approaches 0. In the case of using the comparison result 1B, since the setting of the output of the circuit and the deviation amount of the comparison result 1B are known, it is possible to perform control to bring the deviation amount close to 0.

However, even if it is assumed that the control signal parameter is set and the control parameter becomes as designed, sometimes the value of the control parameter does not become as designed due to the ambient temperature of the quantum bit array 413 or noise from other wiring. In order to grasp such a situation, it is desirable to measure the environmental parameters by the sensor (SEN2) 416 in the vicinity of the quantum bit array 413.

By this measurement, the control parameter second measurement value and the environmental parameter are obtained. As an example of the control for adjusting the value of the control signal parameter, the first comparison unit 431 compares the control parameter first measurement value with the control parameter second measurement value to obtain a comparison result 1A. Further, the first comparison unit 431 compares the measured control parameter second measurement value with a control parameter design value (which can be calculated in consideration of the surrounding situation when the control signal parameter is determined) as a design value to obtain a comparison result 1B.

In the comparison result 1A by the first comparison unit 431, when the deviation amount of all the parameters of the measured control parameter second measurement value from the design value is large, the correction amount calculation unit 433 calculates the correction amount for reducing the value of the control signal parameter, and the feedback control unit 435 further performs correction in consideration of the value of the environmental parameter when performing correction with the correction amount for reducing the value of the control signal parameter. Conversely, when the deviation amount of all the measured control parameter second measurement values from the design value is small, the feedback control unit 435 may perform control to increase the value of the control signal parameter including the correction amount in consideration of the value of the environmental parameter so that the control parameter second measurement value becomes close to the control parameter design value.

Although the deviation amount of all the parameters of the control parameter second measurement value from the design value is targeted, the deviation amount of the parameter having the highest sensitivity from the design value may be targeted. In addition, in a case where further correction is performed in consideration of the value of the environmental parameter, for example, in a case where the temperature is considered as the environmental parameter, when the temperature rises, the optimum value under the temperature condition changes. Therefore, by updating the design value according to a change in temperature (environmental parameter), it is possible to perform control corresponding to the environmental change.

The first comparison unit 431 desirably holds the difference between the values of the parameters with a sign. The comparison results 1A and 1B of the first comparison unit 431 are used for feedback for subsequent quantum bit control. A control parameter is used to estimate a quantum bit state to be described below, but the control parameter is adjusted by adjusting the control signal parameter by the first sequencer 411.

Therefore, it is desirable to hold the deviation amount (comparison result 1A) between the control signal parameter (actually, the control parameter first measurement value) and the control parameter (actually, the control parameter second measurement value) in the third memory 434. The history of the deviation amount is collected also at the time of the next or subsequent adjustment of the control signal parameter, so that the change in the deviation amount between the control signal parameter and the control parameter can be known. Therefore, the adjustment of the control signal parameter can be made efficient.

The second comparison unit 432 compares the operation result of the quantum operation 301 by the actual quantum computer 101 with the simulation result of the quantum operation simulation 122 by the virtual quantum computer 102. Since the quantum operation 301 of the quantum computer uses the results of a plurality of quantum operations, the second comparison unit 432 compares the distribution information of observation results of the quantum bits.

Here, the result of the quantum operation is obtained by measuring (observing) the quantum bits to be observed. Since the quantum bit to be measured has a certain probability amplitude after the quantum operation is performed, one value according to the probability amplitude is obtained in one measurement (observation). That is, by performing this measurement (observation) a plurality of times, an expected value of the quantum bit to be observed is obtained as a result of the quantum operation, and eventually, an expected value as a result of the quantum operation is obtained. By performing quantum bit measurement (observation), the quantum state having the probability amplitude decays and changes to one determined value. Therefore, in order to perform a plurality of measurements (observations) in order to obtain the expected value, it is necessary to perform quantum operation and quantum bit observation a plurality of times.

Specifically, for example, in a case where calculation is performed using four quantum bits of Q0 to Q3, a state of each quantum bit is obtained by observing the four quantum bits Q0 to Q3 after performing a quantum operation on the four quantum bits Q0 to Q3. As a result of one quantum operation, when the spin of the quantum bit is 1 for the upward direction and 0 for the downward direction, for example, Q0=1, Q1=1, Q2=0, and Q3=0 are obtained, and as a result of the next quantum operation, for example, Q0=1, Q1=0, Q2=1, and Q3=0 are obtained, and the results of each quantum operation are different.

By performing this operation a plurality of times, when the probability that each quantum bit becomes 1 is calculated, for example, probability distributions such as probability P(Q0)=0.8 that Q0 becomes 1, probability P(Q1)=0.1 that Q1 becomes 1, probability P(Q2)=0.07 that Q2 becomes 1, and probability P(Q3)=0.03 that Q3 becomes 1 are obtained.

This is a procedure of quantum operation and observation. The plurality of quantum operations here mean that quantum bit probability distribution is obtained by performing one quantum operation a plurality of times and measuring (observing) the values of the respective quantum bits Q0 to Q3 observed after each operation. Adding the probabilities of the respective quantum bits Q0 to Q3 gives 1, but the observation results of the respective times have variations due to the probability amplitudes of the respective quantum bits to be measured.

Based on the first comparison results 1A and 1B of the first comparison unit 431 and the second comparison result of the second comparison unit 432, the correction amount calculation unit 433 calculates the correction amount of the control signal parameter when the quantum operation 301 of the actual quantum computer 101 is executed. The correction amount calculation unit 433 calculates the correction amount of the control signal parameter by modeling the response of the operation result of the quantum operation 301 due to the change in the control parameter. Specifically, for example, the correction amount calculation unit 433 makes a graph of the relationship between a control signal parameter setting value and the control parameter second measurement value, and calculates how much the difference is by table lookup.

The response of the operation result of the quantum operation 301 is a motion of the spin of the quantum bit when controlled with a certain control parameter. For example, it is assumed that the quantum bit rotates by an angle of $\alpha$ when controlled by a set A of control parameters, and that the quantum bit rotates by an angle of $\beta$ when controlled by a set B of control parameters. In this case, $\alpha$ and $\beta$ are responses of operation results.

For this modeling, for example, it is conceivable to observe how the operation fidelity changes when the value of the control signal parameter is changed, and to clarify the relationship between the change amount of the control signal parameter and the operation fidelity. The third memory 434 holds each comparison result of the first comparison unit 431 and the second comparison unit 432 and the correction amount calculated by the correction amount calculation unit 433.

The feedback control unit 435 transmits the correction amount of the control signal parameter calculated by the correction amount calculation unit 433 to the actual quantum computer 101 and the virtual quantum computer 102. The feedback control unit 435 outputs the correction amount of the control signal parameter to the first sequencer of the actual quantum computer 101 and outputs the correction amount to the second sequencer 425 via the second memory 426 of the virtual quantum computer 102.

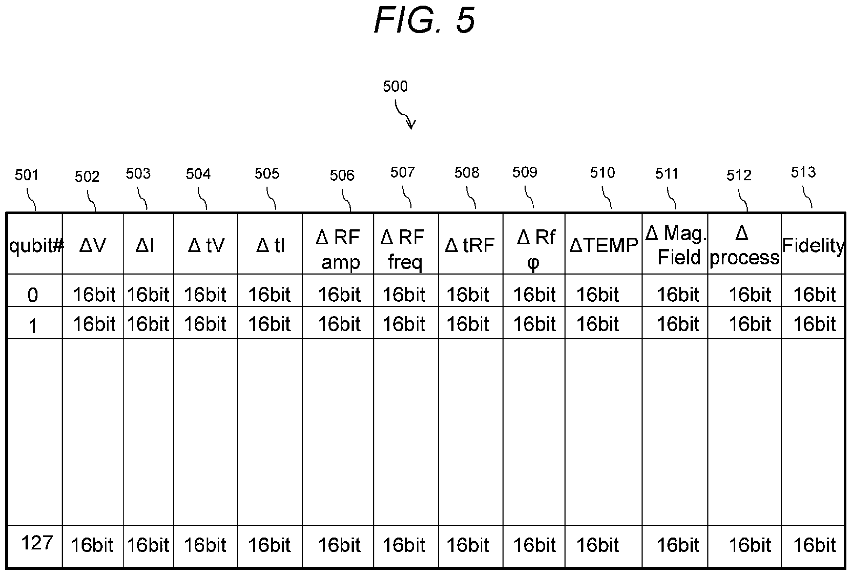

FIG. 5 is an explanatory diagram illustrating an example of content stored in the third memory 434 of the digital twin control device 103. FIG. 5 illustrates an example in which a number of the quantum bit of the quantum bit array 413 is 128, and the control parameter is stored in the table 500 for each quantum bit.

The table 500 includes, as fields, a quantum bit ID 501, a voltage variation ($\Delta V$) 502, a current variation ($\Delta I$) 503, a voltage application time variation ($\Delta t_V$) 504, a current application time variation ($\Delta t_I$) 505, an amplitude variation ($\Delta$RF amp) 506 of the RF signal, a frequency variation ($\Delta$RF freq) 507 of the RF signal, an RF signal application time variation ($\Delta t_{RF}$) 508, a phase shift ($\Delta$RF $\varphi$) 509 of the RF signal, a temperature variation ($\Delta$TEMP) 510, an applied magnetic field variation ($\Delta$Mag.Field) 511, a manufacturing process variation ($\Delta$process) 512, and a quantum bit operation fidelity (Fidelity) 513 (specifically, for example, the integrated deviation amount of the operation fidelity).

The voltage variation ($\Delta V$) 502 is a deviation amount with respect to the voltage V as a design value. The current variation ($\Delta I$) 503 is a deviation amount with respect to the current I as a design value.

The voltage application time variation ($\Delta t_V$) 504 is a deviation amount (comparison result 1B) from the voltage application time tv as the control parameter design value. The current application time variation ($\Delta t_I$) 505 is a deviation amount (comparison result 1B) from the current application time $t_I$ as a control parameter design value.

The amplitude variation ($\Delta$RF amp) 506 of the RF signal is a deviation amount with respect to the amplitude of the RF signal as a design value. The frequency variation ($\Delta$RF freq) 507 of the RF signal is a deviation amount with respect to the frequency of the RF signal as a design value. The RF signal application time variation ($\Delta t_{RF}$) 508 is a deviation amount with respect to the RF signal application time $t_{RF}$ as a design value.

The temperature variation ($\Delta$TEMP) 510 is a deviation amount from the measurement by the sensor (SEN2) 416 with respect to the operating temperature as an environmental parameter setting value.

The applied magnetic field variation ($\Delta$Mag.Field) 511 is a deviation amount from the measurement by the sensor (SEN2) 416 with respect to the applied magnetic field as the environmental parameter setting value.

The manufacturing process variation ($\Delta$process) 512 is a variation amount of a process when a quantum bit chip LSI is manufactured.

In FIG. 5, an entry of each quantum bit is held for one step of the quantum operation 301, but actually, an entry of each quantum bit is held for each step of the quantum operation 301. Each of the control parameters (502 to 513) is stored in 16 bits, for example. Therefore, a memory capacity of 16 (bit) $\times$ 12 (field) $\times$ 128 (quantum bit number)=3 KB is required.

Since the table 500 stores data corresponding to one quantum operation, for example, when the quantum operation 301 is executed in 30 steps, a memory capacity of 90 KB is required. The data length of each control parameter 502 to 513 is not limited to 16 bits. The number of bits can be appropriately changed based on the required accuracy.

The number of control parameters is 12 in this example, but this is merely an example. For example, when a plurality of voltage signals are used to control the quantum bits, the evaluation accuracy can be improved by individually tabulating the voltage signals. Furthermore, control parameters other than those described above can be included.

For example, in the above example, the voltage application time tv is set as the control parameter, and the difference from the initial design value is designated as the voltage application time variation ($\Delta t_V$) 504, but the evaluation accuracy may be improved by also having the rise time and the fall time of the voltage application as the control parameter. In that case, such control parameters may be held independently. The same applies to the current application time $t_I$ and the RF signal application time $t_{RF}$.

In a case where the quantum operation 301 is simulated as a matrix operation, when the quantum computer system 100 has N (N is an integer of 1 or more) quantum bits, usually, $2^N$ states exist, and a large matrix of $(2^N)^2=2^{2N}$ is required as a matrix to be handled. In the case of N=128, a huge memory space of $2^{128}=3.96\times10^{28}$ GB is required, and a matrix operation using a memory space of the square of '$2^{128}=3.96\times10^{28}$ GB' is required for the quantum operation 301.

By the way, assuming that the control parameter corresponds to the operation accuracy of the quantum bit, the control of the quantum bit changes by a certain function according to the values of the voltage, the current, and the degree of application of the RF signal. The quantum operation 301 changes with time according to the Hamiltonian that describes the quantum bit, and the value of the control parameter that causes the temporal change of the energy is described by the Hamiltonian.

Actually, it is necessary to know how the gasket changes by causing the Hamiltonian to act on the gasket ($|\varphi>$), but if it is considered that the change in the control parameter and the change in the gasket are connected by a certain function, the state of the quantum bit can be estimated from the combination information of the control parameters.

By tabulating the relationship between the values of those control parameters and the states of the quantum bits from a large number of basic experiments, it is also possible to tabulate the operation fidelity for the quantum operation 301. However, even if it is difficult to formulate the table in a closed form, the table can be handled by experimentally creating the table. Therefore, in this method, the quantum state of the quantum bit is not sequentially simulated by the quantum operation 301, but the operation fidelity of the quantum operation 301 is estimated by the control parameter for executing the quantum operation 301. Therefore, in principle, the operation amount can be greatly reduced.

However, in the present embodiment, the content of the quantum operation 301 cannot be derived, and the degree of how the spin state of the quantum bit is affected is estimated. Since the purpose of the digital twin is to grasp the operation state of the quantum bit, if the operation fidelity 513 of the quantum bit can be calculated by executing the minimum necessary quantum operation 301, the memory capacity can be greatly reduced.

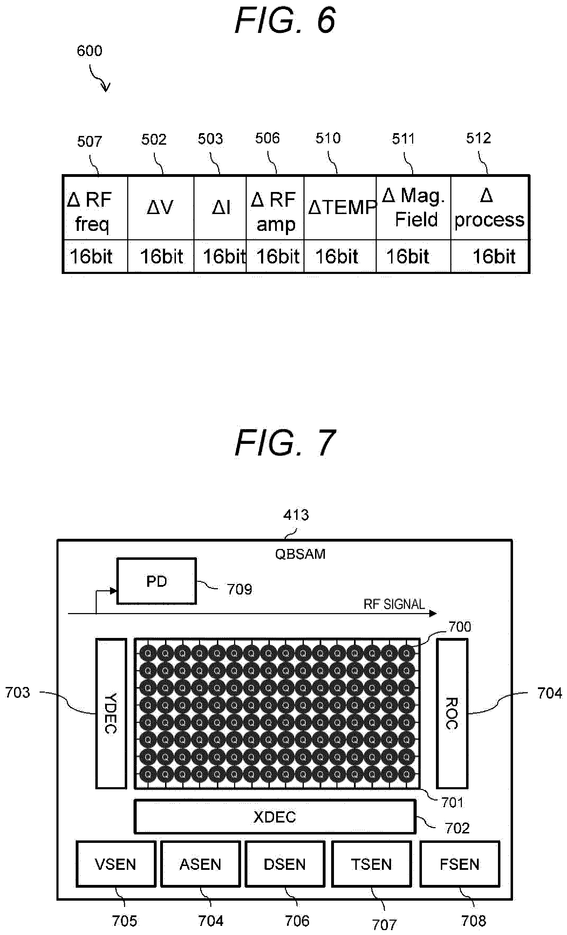

FIG. 6 is an explanatory diagram illustrating another example of the content stored in the third memory 434 of the digital twin control device 103. In FIG. 6, the present embodiment is applicable to a case where there is almost no characteristic variation of each quantum bit. In particular, the size of the semiconductor-based electron spin quantum bit is very small, and in the case of manufacturing the quantum bit by a semiconductor fine process, uniformity of characteristics of each element is kept high. In such a device, individual process variations of each quantum bit can be kept small.

Thus, control parameters such as process, voltage, and temperature can be considered as parameters common to each quantum bit. Specifically, for example, the table 600 includes, as fields, a frequency variation ($\Delta$RF freq) 507 of an RF signal, a voltage variation ($\Delta$V) 502, a current variation ($\Delta$I) 503, an RF signal amplitude variation ($\Delta$RF amp) 506, a temperature variation ($\Delta$TEMP) 510, an applied magnetic field variation ($\Delta$Mag.Field) 511, and a process variation ($\Delta$process) 512. This has an effect of reducing the memory capacity to be used.

FIG. 7 is a block diagram illustrating a configuration example of the quantum bit array 413. The quantum bit array 413 is a quantum bit subarray module (QBSM) including a quantum bit subarray 701, an X selection circuit (XDEC) 702, a Y selection circuit (YDEC) 703, a readout circuit (ROC) 704, a current sensor (ASEN) 704, a voltage sensor (VSEN) 705, a delay detection sensor (DSEN) 706, a temperature detection sensor (TSEN) 707, an applied static magnetic field measurement sensor (FSEN) 708, and a phase detection circuit (PD) 709.

The quantum bit subarray 701 is an aggregate in which a plurality of quantum bits 700 are integrated in a matrix. The X selection circuit 702 selects a column of the quantum bits 700 in an X direction of the quantum bit subarray 701. The Y selection circuit 703 selects a row of the quantum bits 700 in a Y direction of the quantum bit subarray 701.

The current sensor 704 detects an applied current when a current is applied to create and control a gradient of a magnetic field in order to select the quantum bit 700 when selectively inverting the quantum bit 700.

The voltage sensor 705 detects the applied voltages of the two quantum dots that respectively store the two quantum bits 700, for example, when considering an electron spin quantum bit. In addition, although not illustrated, in a case where efficiency or operation fidelity of the quantum operation 301 is improved by dynamically changing the voltage, it is effective to include detection of delay of voltage change.

Since the application timing of the RF signal is the most important in the quantum bit operation, it is effective to detect the application timing of the RF signal. Therefore, the delay detection sensor 706 detects a delay of the RF signal. The temperature detection sensor 707 detects a temperature inside the quantum bit array 413. The applied static magnetic field measuring sensor 708 detects a static magnetic field applied to the quantum bit 700. The phase detection circuit 709 detects the phase of the RF signal that controls the quantum bit 700.

A plurality of quantum bit arrays 413 can be mounted in one LSI. At that time, the various sensors 704 to 709 are independently mounted on each quantum bit array 413. This makes it possible to measure the control parameter of the quantum bit 700 with high accuracy.

In addition, in a case where there is a concern about an area overhead and an increase in power consumption due to the mounting of these sensors 704 to 709, it is also possible to appropriately limit the number of mounted sensors. Note that, in a case where the spatial change of the observation target is small, mounting one or several of the applied static magnetic field measuring sensor 708 and the temperature detection sensor 707 in one chip has an effect of area saving.

<Capturing of Simple deviation from Ideal State and Temporal Change>

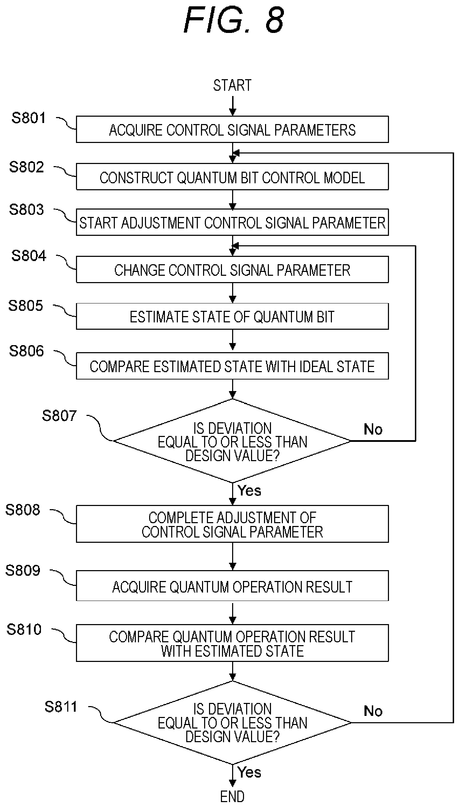

FIG. 8 is a flowchart illustrating an example of an adjustment processing procedure of a quantum bit control model by the quantum computer system 100. The adjustment process illustrated in FIG. 8 is advantageous when it is performed as a preparation before the digital twin control device 103 performs the digital twin operation. Note that several quantum bit control models are conceivable. It is assumed that typical control of the quantum bit 700 follows the Hamiltonian (H) of the following Formula (1) (see NPL 4) .
[Mathematical formula 1]

$$H(t) = J(t)\left(S_L \cdot S_R - \frac{1}{4}\right) + S_L \cdot B_L + S_R \cdot B_R \quad \cdots (1)$$

Here, $S_L$ and $S_R$ are spins and are represented by a spin matrix. $B_L$ and $B_R$ represent magnetic fields applied to the spins $S_L$ and $S_R$. In addition, J(t) is a function indicating the intensity between the spins $S_L$ and $S_R$ at the time t. The first term on the right side of the above formula (1) indicates a two-quantum bit operation in which two quantum bits 700 are related, and the second term and the third term indicate a one-quantum bit operation. Here, it is an example in which the interaction between the two spins $S_L$ and $S_R$ is a function J(t) of time. The applied magnetic field can also be considered as a function of time. Although the Hamiltonian of the quantum bit 700 can be variously considered, in the present specification, the above Formula (1) will be described as a quantum bit control model.
As one method of controlling the quantum bit 700, electromagnetic field simulation and a method of emulating the operation of the quantum bit 700 (hereinafter, a first method) can be considered. The first method is a method for calculating a quantum state by simulating a circuit operation for controlling the quantum bit 700 to acquire data of a signal waveform of a control parameter for controlling the quantum bit 700, obtaining a magnetic field applied to the quantum bit 700 using the signal waveform data, and solving a Schrodinger equation using the Hamiltonian of the above Formula (1). This method utilizes electromagnetic field simulation and uses the temporal change of the strength of the applied magnetic field, and thus the calculation accuracy is high, but high calculation resources are required.
Another method is a method (hereinafter, a second method) of constructing a correlation between each control parameter of the quantum bit 700 and the operation of the quantum bit 700 and simulating the operation of the quantum bit 700 using the correlation. Specifically, not the control parameter but the correlation between the control parameter and the control signal parameter is acquired, and then the control signal parameter is used. Hereinafter, description will be made using control signal parameters. The second method can be performed with less calculation resources because the quantum bit control model is simplified. FIG. 8 illustrates a processing procedure example common to both methods.
In FIG. 8, the virtual quantum computer 102 acquires control signal parameters (step S801), and constructs a quantum bit control model for controlling the quantum bit 700 in the ideal state (step S802). For example, the virtual quantum computer 102 sets the Hamiltonian of the quantum bit 700 in a form including electromagnetic interaction, and calculates a value of the potential barrier due to the applied voltage and a deviation of a value of the static magnetic field due to the application of the current, and a rotation operation of the spin due to the application of the RF signal to the quantum bit 700. As a result, a quantum bit control model is constructed.
Then, the virtual quantum computer 102 starts adjustment of the control signal parameters (step S803). The digital twin control device 103 changes the control signal parameter set in the quantum bit control model by the virtual parameter change 133 (step S804). However, if step S807 has not been executed, no change is made.
In step S804, after the first comparison unit 431 compares the changed control signal parameter with the control parameter second measurement value (voltage value, current value, RF frequency, and control timing) in the vicinity of the quantum bit array 413 to obtain the comparison result 1B, the correction amount calculation unit 433 changes the value of the control signal parameter in a case where it is necessary to change the control signal parameter, for example, in a case where the control parameter second measurement value is larger than a certain threshold value, the value of the control signal parameter is decreased, and in a case where the control parameter second measurement value is smaller than the certain threshold value, the value of the control signal parameter is increased. As an algorithm for this comparison, table reference based on an experience value or the like is conceivable, and an arithmetic circuit may be mounted in the correction amount calculation unit 433.
The virtual quantum computer 102 estimates the state of the quantum bit 700 using the quantum bit control model (step S805). Specifically, for example, the virtual quantum computer 102 calculates how the state of the quantum bit 700 changes when the control parameter is input to the quantum bit control model using the following Formula (2). Thereafter, the digital twin control device 103 compares the calculation results in the COMP2 and executes necessary correction.
[Mathematical formula 2]

$$H(t) = \alpha J(t)\left(S_L \cdot S_R - \tfrac{1}{4}\right) + \beta\, S_L \cdot B_L(t) + \gamma\, S_R \cdot B_R(t) \quad \cdots (2)$$

$B_L(t)$ and $B_R(t)$ are functions indicating magnetic fields applied to the spins $S_L$ and $S_R$ at the time t. The virtual quantum computer 102 recreates the functions $J(t)$, $B_L(t)$, and $B_R(t)$ or sets fitting parameters $\alpha$, $\beta$, and $\gamma$ by changing the control signal parameters (step S804).

By the virtual and actual operation result comparison 131, the virtual quantum computer 102 compares the state (for example, the spin orientation of the quantum bits 700 on the Bloch sphere) of the quantum bit 700 estimated by the control signal parameter (step S804) after the change in step S805 with the ideal state of the quantum bit 700 in the second comparison unit 432 (step S806), and determines whether or not the deviation (that is, the deviation amount (1-operation fidelity)) from the ideal state is within the design value (step S807). If the deviation is not within the designed value (step S807: No), the value of the changed control signal parameter is not appropriate, and thus the process returns to step S804. Then, the digital twin control device 103 changes the control signal parameter again by the virtual parameter change 133 (step S804) .

Specifically, for example, the digital twin control device 103 may change the value by adding or subtracting a value corresponding to a predetermined change width to or from at least one of the values of the control signal parameters, or may change the value by arbitrary input by the user of the digital twin control device 103. After this change, the virtual quantum computer 102 estimates the state of the quantum bit 700 again (step S805) .

On the other hand, when the deviation falls within the design value, it is determined that the value of the control signal parameter is appropriate, and the virtual quantum computer 102 completes the adjustment of the control signal parameter (step S808).

Then, the digital twin control device 103 applies the control signal parameter used when the quantum bit state is estimated to the quantum bit 700 of the actual quantum computer 101, and causes the actual quantum computer 101 to measure the state of the quantum bit 700. Then, the digital twin control device 103 acquires the measurement value of the quantum bit state measured by the actual quantum computer 101 from the actual quantum computer 101 as the quantum operation result (step S809).

The digital twin control device 103 compares the acquired quantum operation result with the estimation result by the quantum bit control model adjusted in step S808 in the second comparison unit 432 (step S810), and determines whether or not the deviation from the quantum operation result is equal to or less than the design value (step S811).

If the deviation from the quantum operation result is not equal to or less than the design value (step S811: No), the quantum bit control model is inappropriate, and the process returns to step S802, and the virtual quantum computer 102 reconstructs the quantum bit control model (step S802) . Specifically, for example, the digital twin control device 103 adjusts the values of the fitting parameters $\alpha$, $\beta$, and $\gamma$ other than the control parameters and gives the values to the virtual quantum computer 102.

The quantum computer system 100 sequentially executes such iteration, and finally, in a case where the deviation from the quantum operation result becomes equal to or less than the design value (step S811: Yes), it is determined that the adjustment of the control parameter is finished, and the construction of the quantum bit control model is completed.

As described above, two methods can be considered for such modeling. By modeling according to the first method, a quantum bit control model for performing emulation based on a physical phenomenon is constructed.

On the other hand, by modeling by the second method, a quantum bit control model that defines a correlation with the state of the quantum bit 700 realized when the control parameter is actually applied to the quantum bit 700 is constructed using the control signal parameter (timing of applying various signals, voltage and current of various signals, phase and amplitude of RF signal, and frequency) provided to each electrode for controlling the quantum bit 700.

By using the quantum bit control model modeled by the second method, the state of the quantum bit 700 can be simulated in controlling the quantum bit 700 by setting the control signal parameter. The state of the quantum bit 700 can be calculated as a spin interaction of an electron spin by electromagnetic field analysis or the like in a case where each control signal parameter such as a voltage of each electrode that controls the quantum bit 700, an applied current, a frequency and a phase of an RF signal, and a timing at which these are actually applied to the quantum bit 700 is determined.

In this way, the state of the spin of the quantum bit 700 can be calculated, for example, as information on the Bloch sphere. This calculation involves electromagnetic field analysis and requires high calculation resources. However, if a quantum bit control model that associates a control parameter with the spin state of the quantum bit 700 as an application result thereof can be constructed, the state of the quantum bit 700 can be estimated from the value of the control parameter. Furthermore, when the relationship between the control parameter and the control signal parameter becomes clear, a quantum bit control model that associates the control signal parameter with the spin state of the quantum bit 700 of the application result thereof can be constructed.

The quantum bit control model modeled by the second method is an effective model for executing an effective operation utilizing a classical computer. In many cases, it is effective to be able to emulate the behavior of the quantum bits 700 of the actual quantum computer 101 with a so-called lightweight model that does not require such a large amount of calculation resources. Of course, in a case where detailed simulation is required due to an environmental situation or the like, it is also possible to perform evaluation in a hybrid type in which a part of calculation is substituted by calculation using a model that requires a large amount of such calculation resources.

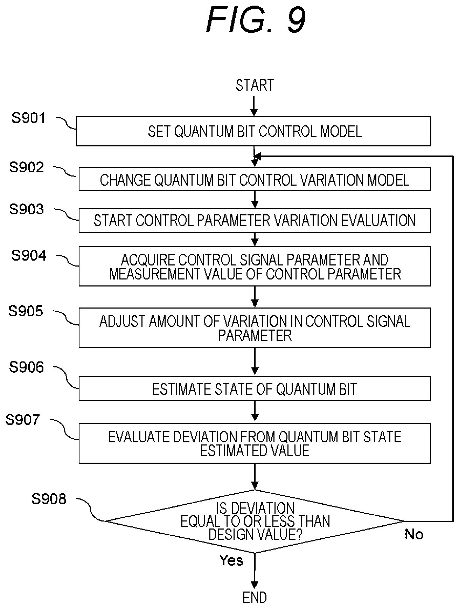

In the following flowcharts (FIGS. 9 to 12), a quantum bit control model using a correlation between a control signal parameter and the quantum bit 700 will be described with the quantum bit control model in mind.

The quantum bit control model described above is a model representing an ideal state. That is, the calculation other than the target quantum bit 700 is not executed, and the influence of a crosstalk noise at the time of controlling the quantum bits 700 other than the target or the noise due to the environmental change such as the temperature is not included.

The behavior of the actual quantum computer 101 generally deviates from the ideal state. This is because an ambient temperature, a magnetic field, a physical layout, and an environmental factor caused by device variation affect. Based on this quantum bit control model, it is effective to observe the behavior of the quantum bits 700 in the quantum bit array 413 of the actual quantum computer 101, change the quantum bit control model as necessary, and create an effective quantum bit control model.

Such a quantum bit control model set by the control signal parameter of the quantum bit 700 deviated from the ideal state desirably improves the ideal quantum bit control model. In addition, it is assumed that the quantum bit control model may change depending on the actual operation environment. When the actual quantum computer 101 is operated, it is effective to execute the correction of the ideal quantum bit control model before the start of the operation.

Furthermore, in operating the actual quantum computer 101, the control of the quantum bit 700 is also affected by a change in the influence of the temperature and the magnetic field with the lapse of time. In order to remove the influence, it may be effective to appropriately execute the correction of the quantum bit control model even during the operation of the actual quantum computer 101.

This correction is desirably executed by one stage of quantum operation of the actual quantum computer 101. This is because, when a large number of quantum bits 700 are brought into a state of being tangled with each other, an influence range thereof is widened. The one-stage quantum operation is assumed to be a single quantum bit operation (X gate or the like) or a two quantum bit operation (C-NOT gate or the like). The digital twin control device 103 searches for a condition that the amount of change (hereinafter, referred to as a deviation between an estimated value and a theoretical value) of the estimated value of the quantum bit state as the control result from the ideal value exceeds the design value.

When the deviation between the estimated value and the theoretical value becomes equal to or less than the design value, the digital twin control device 103 actually compares the estimated value of the quantum bit state with the operation result of the actual quantum computer 101 and calculates a comparison result (hereinafter, referred to as a deviation between an estimated value and an actually operated value) with the actual quantum computer 101. In this way, the estimated value obtained by the emulation is compared with the operation result of the actual quantum computer 101. In a case where the deviation between the estimated value and the actually operated value is not equal to or less than the design value, the digital twin control device 103 executes the change of the quantum bit control model, and executes the search for the condition under which the deviation between the estimated value and the theoretical value exceeds the design value and the calculation of the deviation between the estimated value and the actually operated value again.

The modification of the quantum bit control model includes improvement of various fitting parameters $\alpha$, $\beta$, and $\gamma$ excluding control parameters set in the quantum bit control model, or the quantum bit control model itself. If the deviation between the estimated value and the actually operated value is equal to or less than the design value, the adjustment of the quantum bit control model is completed. Hereinafter, capturing of the influence on the variation will be described in detail with reference to FIGS. 9 to 12.

<Capturing of Influence on Variation>

FIG. 9 is a flowchart illustrating an example of a processing procedure of creating a quantum bit control model (hereinafter, a quantum bit control variation model) in consideration of variations in the control of the single quantum bit and the two quantum bits by the quantum computer system 100, and relates to the calibration of each quantum bit 700.

For example, the virtual quantum computer 102 sets the quantum bit control model created in FIG. 8 (step S901), and changes the quantum bit control variation model created in steps S903 to S908 in a case of No in step S909 (step S902). Then, the quantum computer system 100 starts the control parameter variation evaluation (step S903).

The digital twin control device 103 acquires the control signal parameter and the control parameter second measurement value from the actual quantum computer 101 (step S904), and adjusts the variation amount of the control signal parameter based on the acquired second measurement value of the control parameter and the first measurement value of the control signal parameter under control (step S905).

Specifically, for example, the digital twin control device 103 adjusts the variation amount of the control signal parameter in consideration of the deviation from the ideal state of the allowable quantum bit state under conditions in which the environmental parameters are variously different during operation of the actual quantum computer 101. Since the allowable variation changes for each environment in which the quantum operation is executed in the actual quantum computer 101, in step S905, the digital twin control device 103 quantifies the influence of the variation in the control signal parameter on the quantum operation.

Next, the virtual quantum computer 102 estimates the state of the quantum bit 700 of the actual quantum computer 101 only by the variation of the measurement value of the control parameter and the variation of the measurement value of the environmental parameter at the time of the digital twin operation (step S906).

Specifically, for example, the virtual quantum computer 102 uses the environmental parameter and the control signal parameter of which the variation amount has been adjusted in step S905 to acquire the correlation between the control signal parameter corresponding to each environmental parameter and the spin state of the quantum bit 700 when the quantum bit operation is executed using the control parameter acting on the quantum bit 700 when the control signal parameter is set, thereby creating the quantum bit control variation model. Specifically, for example, the quantum bit control variation model is created using the following Formulas (3) to (5).

$$[\text{Mathematical formula 3}]$$

$$H(t) = \alpha_i J_{i,i+1}(t)\left(S_i \cdot S_{i+1} - \frac{1}{4}\right) + \beta_i S_i \cdot B_i(t) + \gamma_i S_{i+1} \cdot B_{i+1}(t)$$
$$\cdots (3)$$

$$J_{i,i+1}(t) = J_{Typ}(t) + \Delta J_{i,i+1}\left(t: V, I, R_f, T, P\right) \cdots (4)$$

$$B_i(t) = B_{Typ}(t) + \Delta B_i\left(t: V, I, R_f, T, P\right) \cdots (5)$$

In the above formulas (3) to (5), i is the number of the quantum bit 700. $J_{i,i+1}(t)$ in the above formula (3) is expressed by the above formula (4), and $B_i(t)$ in the above formula (3) is expressed by the above formula (5). Here, $J_{Typ}(t)$ and $B_{Typ}(t)$ in the above Formulas (4) and (5) are typical functions in which variations in the functions $J(t)$ and $B(t)$ used in the description of FIG. 8 are not considered.

$J_{Typ}(t)$ and $B_{Typ}(t)$ are functions of time expressed as amounts that change depending on the position when the electromagnetic wave applied to each spin is the control parameter (V (voltage), I (current), RF (amplitude, frequency, phase, and the like of the RF signal)) and the environmental parameter (T (temperature), P (manufacturing process-induced variation)) (by acquiring the relationship between the control signal parameter and the control parameter, the relationship can be finally expressed as a function of the control signal parameter). In the simplest case, correction as a constant value is considered. As a result, the virtual quantum computer 102 estimates the quantum bit state using the measurement value of the control parameter for the quantum bit 700 which is the calculation target.

Next, the digital twin control device 103 applies the control parameter used when estimating the quantum bit state to the quantum bit 700 of the actual quantum computer 101, compares the estimated value of the quantum bit state with the measurement value obtained by measuring the state of the quantum bit 700 of the actual quantum computer 101, and evaluates the deviation between the estimated value and the measurement value (step S907). Specifically, for example, the digital twin control device 103 determines whether or not the deviation between the estimated value and the measurement value is equal to or less than the design value (step S908).

If the deviation between the estimated value and the measurement value is equal to or less than the design value (step S908: Yes), the creation of the quantum bit control variation model is completed.

When the deviation between the estimated value and the measurement value is not the design value or less (step S908: No), the process returns to step S902, and the virtual quantum computer 102 updates the quantum bit control variation model. Specifically, for example, the digital twin control device 103 adjusts the values $\alpha_i$, $\beta_i$, and $\gamma_i$ of the fitting parameters for fitting the quantum bit control variation model other than the control parameters by the virtual parameter change 133 and gives the adjusted values to the virtual quantum computer 102.

When adjustment with such fitting parameters cannot be performed, it is necessary to examine the quantum bit control variation model itself. For example, the digital twin control device 103 changes the Hamiltonian defining the behavior of the quantum bit 700 to the quantum bit control model in which the noise amount is combined with a certain coupling constant by the virtual parameter change 133 as illustrated in the following Formula (6).

[Mathematical formula 4]

$$H(t) = \alpha_i\, J_{i,i+1}(t)\left(S_i \cdot S_{i+1} - \frac{1}{4}\right) + \beta_i\, S_i \cdot B_i(t) + \gamma_i\, S_{i+1} \cdot B_{i+1}(t) + \mu_i\, H_{Noise}(t) \cdots (6)$$

The above formula (6) is a formula in which a correction term $\mu_i \cdot H_{Noise}(t)$ is added to the right side of the above formula (3). In step S902, the digital twin control device 103 adjusts the correction term $\mu_i \cdot H_{Noise}(t)$ by the virtual parameter change 133. $\mu_i$ is a coupling constant, and $H_{Noise}(t)$ is a noise amount at time t.

Such a correction term $\mu_i \cdot H_{Noise}(t)$ can be applied not only to a simple noise effect but also to a case of introducing an effect of an influence of interaction between a spin and an orbit caused by a shape of a potential barrier forming a quantum dot. The correction term $\mu_i \cdot H_{Noise}(t)$ varies depending on the actual method for manufacturing the quantum dot. By sufficiently investigating the behavior of the quantum bit 700 based on the actual measurement data before executing the digital twin operation, the efficiency of this modeling is improved.

Alternatively, a high-order correction term is theoretically known. When the influence is small, a high-order correction term is set in advance in the above formula (6). The digital twin control device 103 may change the parameter of the higher-order correction term from 0 by the virtual parameter change 133. Thus, the first modeling according to the above equation (6) is constructed over time. The modeling by the above Formula (6) is processing independent of that in FIG. 9.

On the other hand, also when the digital twin is executed as the digital twin according to FIG. 9, it is important to appropriately evaluate the variation based on the temporal change, and it is desirable to correct the parameter of the high-order correction term at every predetermined time. This processing is executed for each instruction of the quantum bit operation. In this case, it is desirable to execute the evaluation of the single quantum bit and the basic operation such as the evaluation of the two quantum bits. By executing this processing, a table for state estimation of the quantum bits 700 can be created using the relationship between the environmental parameters and the control parameters. In the digital twin control, it is possible to estimate the state of the quantum bit 700 by utilizing this table.

<Capturing of Ambient Noise>

In general, a quantum operation is a combination of a plurality of operations, and operations are sequentially performed in time series. When these sequential processing operations are executed, the influence of the crosstalk noise on the non-control target quantum bits 700 other than the control target quantum bits 700 cannot be ignored. It is desirable to model the influence of this noise and apply correction at the time of the digital twin operation.

When the influence of noise is modeled, it is necessary to model the environment of the actual quantum computer 101 in detail. In order to model the connection configuration of the quantum bits 700 and the propagation of noise at the time of control by the control parameter, first, it is necessary to operate the small-scale quantum bit array 413 and evaluate a shadow such as crosstalk by actual measurement.

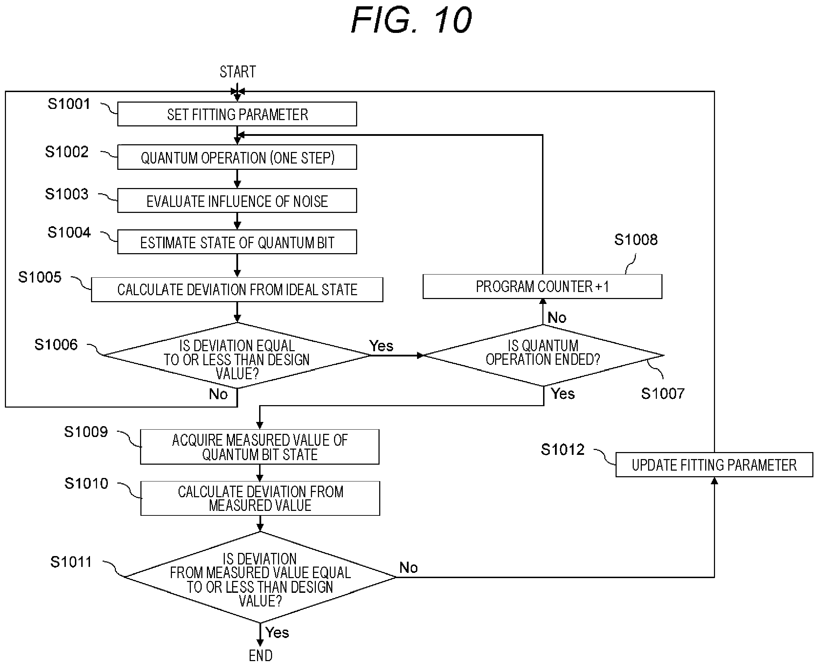

FIG. 10 is a flowchart illustrating an example of a processing procedure of creating a quantum bit control model (hereinafter, a quantum bit control noise model) including the influence of noise from the surroundings. First, the digital twin control device 103 sets the fitting parameters in the quantum bit control model of the virtual quantum computer 102 by the virtual parameter change 133 (step S1001).

Next, the virtual quantum computer 102 executes quantum operation for one step of a quantum bit group (hereinafter, an adjustment target quantum bit group) to be subjected to noise adjustment by the quantum operation simulation 122 (step S1002). The adjustment target quantum bit group is updated each time a program counter is incremented in step S1008.

Next, the virtual quantum computer 102 evaluates the influence of noise on a non-adjustment target quantum bit group from the quantum operation result of step S1002 (step S1003). That is, while evaluating the quantum bit state of the adjustment target quantum bit group, the virtual quantum computer 102 evaluates the influence brought about when controlling the adjustment target quantum bit group even in the non-adjustment target quantum bit group. Data indicating the influence of noise in the non-adjustment target quantum bit group is referred to as noise data. For the evaluation of the noise data, a circuit simulation result such as electromagnetic field analysis of the quantum bit array 413 can be used.

The influence of the control parameter on the state of the non-adjustment target quantum bit group is desirable when considered as a response to the non-adjustment target quantum bit group for various control parameters for controlling the adjustment target quantum bit group. For example, the virtual quantum computer 102 can model the correlation between the control parameter and the state of the quantum bit 700 by acquiring an intensity distribution and the like of the spatially distributed electromagnetic field by the electromagnetic field simulator using the control parameter. The virtual quantum computer 102 can construct a noise model for controlling the adjustment target quantum bit group based on such correlation data.

Next, the virtual quantum computer 102 estimates the state of each quantum bit 700 of the adjustment target quantum bit group by the quantum operation simulation 122 (step S1004). Specifically, for example, similarly to step S805 in FIG. 8, the virtual quantum computer 102 calculates how the state of each quantum bit 700 of the adjustment target quantum bit group changes using the above Formula (2), and executes necessary correction.

Next, similarly to step S806, the virtual quantum computer 102 compares the state (for example, the spin orientation of the quantum bits 700 on the Bloch sphere) of the quantum bit 700 of the adjustment target quantum bit group estimated by the control parameter with the ideal state of the quantum bit 700 of the adjustment target quantum bit group, and calculates the deviation (that is, the deviation amount (1-operation fidelity)) from the ideal state (step S1005). Then, the digital twin control device 103 determines whether the deviation is equal to or less than the design value (step S1006).

If the deviation is not equal to or less than the design value (step S1006: No), the process returns to step S1001, and the digital twin control device 103 resets the value of the fitting parameter to a different value. Specifically, for example, the digital twin control device 103 may change the value by adding or subtracting a value corresponding to a predetermined change width to or from at least one of the values of the fitting parameter, or may change the value by arbitrary input by the user of the digital twin control device 103.

On the other hand, if the deviation is equal to or less than the design value (step S1006: Yes), the digital twin control device 103 determines whether the quantum operation has ended (step S1007). The end of the quantum operation means that there is no adjustment target quantum bit group in the virtual quantum computer 102. That is, it indicates a state in which the program counter cannot be updated any more in step S1008.

When the quantum operation has not been completed (step S1007: No), the virtual quantum computer 102 increments the program counter (step S1008), and returns to step S1002. As a result, the non-target quantum bit group is updated to the target quantum bit group.

In a case where the quantum operation ends in step S1007 (step S1007: Yes), the digital twin control device 103 applies the control parameter used when the quantum bit state is estimated to the quantum bit 700 of the actual quantum computer 101, and causes the actual quantum computer 101 to measure the state of the quantum bit 700. Then, the digital twin control device 103 acquires the measurement value of the quantum bit state measured by the actual quantum computer 101 from the actual quantum computer 101 (step S1009).

The digital twin control device 103 compares the estimated value of the quantum bit state of each quantum bit 700 of all the adjustment target quantum bit groups estimated in step S1004 with the experimental result of measuring the state of the quantum bit 700 of the actual quantum computer 101, and calculates the deviation between the estimated value and the measurement value (step S1010).

Each step of the quantum operation is processing of integrating an operation error of the quantum operation on the corresponding quantum bit 700 by matrix operation. In addition, when a quantum entangled state occurs, the quantum bits 700 other than the calculation target are also affected, but the effect thereof is also captured. If there is even one quantum bit 700 in which the deviation is not equal to or less than the design value, the fitting parameter is updated, but when the magnitude of the influence is determined and the error is sufficiently small, an approximation to be ignored is added, and the evaluation time can be shortened. Then, the digital twin control device 103 determines whether or not the deviation between the estimated value and the measurement value is equal to or less than the design value (step S1011).

When the deviation between the estimated value and the measurement value is equal to or less than the design value (step S1011: Yes), the quantum bit control noise model is constructed. On the other hand, when the deviation between the estimated value and the measurement value is not equal to or less than the design value (step S1011: No), the digital twin control device 103 updates the fitting parameter of the quantum bit control model by the virtual parameter change 133 (step S1012), and returns to step S1001.

Specifically, for example, the digital twin control device 103 may change the value by adding or subtracting a value corresponding to a predetermined change width to or from at least one of the values of the fitting parameter by the virtual parameter change 133, or may change the value by arbitrary input by the user of the digital twin control device 103.

Note that, even if this loop is executed a predetermined number of times, in a case where the quantum bit control noise model is not finally constructed, it is necessary to update the original quantum bit control model itself. That is, this is a case where adjustment with simple fitting parameters cannot be performed. By sufficiently investigating the behavior of the quantum bit 700 based on the actual measurement data before executing the digital twin operation, the efficiency of constructing the quantum bit control noise model is improved.

Alternatively, the high-order correction term may be set in the quantum bit control model in advance, and the digital twin control device 103 may change the parameter of the high-order correction term from 0. As described above, at the time of setting the first quantum bit control model, the digital twin control device 103 takes time. This is a process independent of FIG. 10. Therefore, it is desirable to attempt to set a quantum bit control model with some benchmark quantum bit arrays 413.

After the quantum bit control noise model is constructed by the processing illustrated in FIG. 10, the quantum computer system 100 executes the processing of FIG. 10 on the quantum bit control noise model. Specifically, for example, the virtual quantum computer 102 executes a quantum operation on the target quantum bit group (step S1002). The virtual quantum computer 102 evaluates the influence of noise (step S1003) and estimates a quantum bit state (step S1004).

The virtual quantum computer 102 calculates a deviation (that is, the deviation amount (1-operation fidelity)) between the estimated quantum bit state and the ideal state for the target quantum bit group (step S1005). If the deviation is equal to or less than the design value (step S1006: Yes), the digital twin control device 103 determines whether or not the quantum operation is ended (step S1007). If the quantum operation is not ended (step S1007: No), the program counter is incremented (step S1008), and the quantum operation result of the next target quantum bit group is acquired (step S1002).

After completion of the quantum operation (step S1007: Yes), the digital twin control device 103 applies the quantum bit control noise model to the quantum bit 700 of the actual quantum computer 101, and causes the actual quantum computer 101 to measure the state of the quantum bit 700. Then, the digital twin control device 103 acquires the measurement value of the quantum bit state measured by the actual quantum computer 101 from the actual quantum computer 101 (step S1009).

The digital twin control device 103 compares the estimated value of the quantum bit states of all the adjustment target quantum bit groups estimated in step S1004 with the experimental result of measuring the state of the quantum bits 700 of the actual quantum computer 101, and calculates the deviation between the estimated value and the measurement value (step S1010). Then, the digital twin control device 103 determines whether or not the deviation between the estimated value and the measurement value is equal to or less than the design value (step S1011).

If the deviation between the estimated value and the measurement value is equal to or less than the design value (step S1011: Yes), the quantum bit control noise model is determined. Therefore, the quantum bit control noise model can be applied and used in the actual quantum computer 101.

On the other hand, when the deviation between the estimated value and the measurement value is not equal to or less than the design value (step S1011: No), the digital twin control device 103 updates the fitting parameter of the quantum bit control noise model (step S1012), and returns to step S1001. Specifically, for example, the digital twin control device 103 changes a coupling constant to be described below in addition to the fitting parameters.

Changing the fitting parameter and the coupling constant avoids a reduction in the operation fidelity of the quantum operation 301 when the quantum bit state is changed due to the influence of noise. In changing the fitting parameter and the coupling constant, first, a coupling constant between an ideal quantum bit control model and an assumed noise model is used as a parameter. The digital twin control device 103 models the influence of noise by adjusting the coupling constant and the fitting parameters.

When the Hamiltonian describing the quantum bit 700 is H, the Hamiltonian of the ideal quantum bit control model is H0, and the Hamiltonian indicating the influence of noise is $H_{noise}$, the above Formula (6) is generally expressed as the following Formula (7).

[Mathematical formula 5]

$$H = H_0\left(\alpha, \beta, \cdots\right) + \mu H_{noise} \quad \cdots \ (7)$$

Here, $\alpha$, $\beta$, $\cdots$ are fitting parameters, and $\mu$ is a coupling constant. First, the digital twin control device 103 adjusts the fitting parameters, and then brings the quantum bit control model of the actual Hamiltonian H close to the entity by changing the coupling constant $\mu$, changing the Hamiltonian $H_{noise}$ indicating the influence of noise, or the like.

<Digital Twin Operation>

In the digital twin operation of the present embodiment, the state of the control parameter of the quantum bit 700 is monitored and the state of the quantum bit 700 is estimated, but correction is not performed on the operation of the quantum bit group during the quantum operation. The necessary correction is performed at the time of the next operation of the quantum circuit. In the case of executing the digital twin operation, the digital twin control device 103 reflects various influences in the actual operation on the control parameters of the quantum bit 700 to estimate the operation status of the actual operation, that is, the quantum bit state. This improves the quality of the quantum operation.

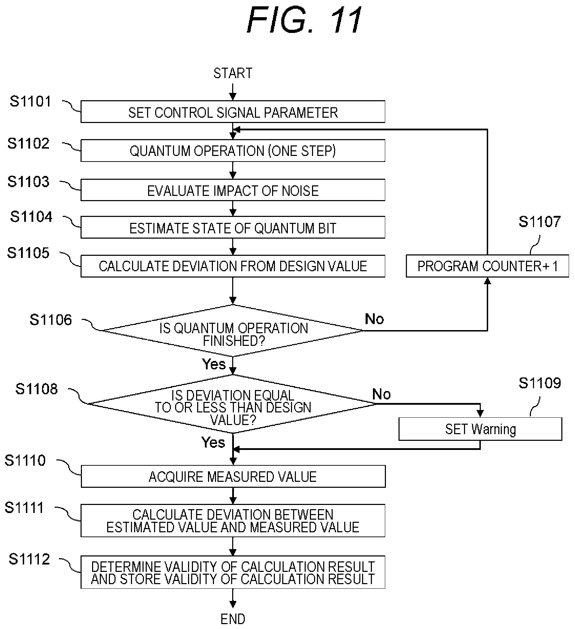

FIG. 11 is a flowchart illustrating a first digital twin operation processing procedure example. The first digital twin operation processing procedure example is operated using the model constructed in FIGS. 8 to 10. In the digital twin operation, the virtual quantum computer 102 executes the quantum bit state evaluation using the quantum bits 700 having the quantum bit connection relationship similar to that of the actual machine, the quantum operation sequence being identical to the quantum operation executed by the actual quantum computer 101.

The virtual quantum computer 102 sets the control signal parameters in the virtual quantum computer 102 (step S1101). At this time, the virtual quantum computer 102 is set to perform quantum bit operation on the basis of the quantum bit control model. The virtual quantum computer 102 performs a quantum operation for one step on the target quantum bit group based on the quantum bit control model, and transmits the quantum operation result to the digital twin control device 103. The digital twin control device 103 acquires the quantum operation result for one step transmitted from the virtual quantum computer 102 (step S1102) .

In addition, the virtual quantum computer 102 acquires the ambient control noise data and the ambient environment sensor data, and evaluates the influence of the noise on the quantum bit state, similarly to step S1003 (step S1103). Then, similarly to step S1004, the virtual quantum computer 102 estimates the state of each quantum bit 700 of the target quantum bit group (step S1104). Here, for example, when the target quantum bit group is 128 quantum bit groups, the digital twin control device 103 estimates a quantum bit state for 128 quantum bits.

Then, the digital twin control device 103 calculates a deviation (that is, the deviation amount (1-operation fidelity)) between the estimated value of the quantum bit state and the design value (step S1105). Then, the digital twin control device 103 determines whether the quantum operation has been completed (step S1106). If the quantum operation has not been completed (step S1106: No), the virtual quantum computer 102 increments the program counter and executes an operation of a next-stage quantum bit group (step S1102).

On the other hand, if the quantum operation has been completed (step S1106: Yes), the digital twin control device 103 determines whether or not the deviation calculated in step S1105 is equal to or less than the design value for the quantum bit group of each stage (step S1108). The digital twin control device 103 sets a warning only for the quantum bit group in which the deviation is not equal to or less than the design value (step S1108: No) and sets a flag indicating that a validity of the quantum operation result is low (step S1109).

Then, the digital twin control device 103 sets the control parameter in the actual quantum computer 101 and acquires the measurement value for the quantum bit group of each stage from the actual quantum computer 101 (step S1110). The digital twin control device 103 calculates a deviation between the estimation value in step S1104 and the measurement value in step S1110 for the quantum bit group of each stage (step S1111).

Then, the digital twin control device 103 determines the validity of the calculation result of step S1111 for each quantum bit group, and stores the determination result (including the flag of the warning setting of step S1109) in the third memory 434 (step S1112). The validity of the calculation result is a flag indicating validity if the deviation is equal to or less than the design value, and indicating illegality if the deviation is not equal to or less than the design value. As a result, the digital twin operation ends.

In FIG. 11, the digital twin operation for one quantum operation is described. One method of the quantum operation is to repeatedly execute the operation a large number of times to acquire an expected value of a solution. In a case where the simulation is slower than the actual machine operation, it is possible to execute the simulation and evaluate the operation of the actual machine while the actual machine operation is executed a plurality of times. In a case where the simulation can be executed at a relatively high speed, the processing can be executed in parallel with the quantum operation.

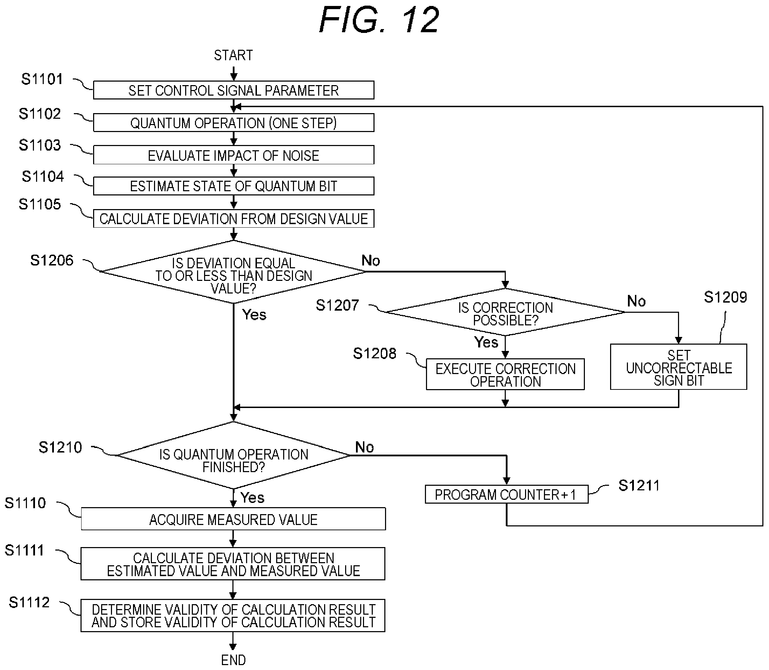

FIG. 12 is a flowchart illustrating a second digital twin operation processing procedure example. The second digital twin operation processing procedure example is an execution example of improving the operation accuracy of the quantum bit group by executing the correction calculation in a case where the quantum bit state deviates from the ideal value when one quantum bit group is calculated. The second digital twin operation processing procedure example is operated using the model constructed in FIGS. 8 to 10. In the digital twin operation, the quantum bit state is evaluated using the quantum bit array 413 identical to the quantum operation executed by the actual quantum computer 101. The same processes as those in FIG. 11 are denoted by the same step numbers, and the description thereof will be omitted.

After step S1105, if the deviation is equal to or less than the design value (step S1206: Yes), the digital twin control device 103 determines whether correction is possible (step S1207). Note that, as to whether or not the correction is possible, for example, a case of an uncompute to be described below is considered. In this case, since an "inverse operation" of a "certain operation" is performed, it is possible to efficiently compensate for the errors accumulated at the time of "certain operation". As such, a correctability may be found logically. Furthermore, it is necessary to consider an influence range of entanglement and the like, and it is desirable to determine a correctable portion from the quantum circuit.

If it is determined that correction is possible (step S1207: Yes), the digital twin control device 103 executes the correction calculation (step S1208) and proceeds to step S1210. The digital twin control device 103 executes the correction calculation on the target quantum bit group of the actual quantum computer 101.

This correction calculation is based on the premise that the calculation fidelity of the quantum bit can be calculated using the value of the control signal parameter. That is, it is assumed that, for example, the rotation angle of the spin of the quantum bit 700 can be predicted with the value of the control signal parameter. For example, the rotation calculation $Rx(\Theta)$ around an x-axis returns to an original state if $Rx(-\Theta)$ is set.

When $Rx(\Theta)$ is desired but $Rx(\Theta')$ is set, rotating $\Delta\Theta=\Theta'-\Theta$ ($\Theta'>\Theta$) in the opposite direction results in $Rx(\Theta)$. If $\Theta'<\Theta$, rotate $\Delta\Theta=\Theta-\Theta'$ in a forward direction. The

rotation calculation of $\Delta\Theta$ is a correction calculation.

As described above, it is possible to estimate the state of the quantum bit only by the value of the control signal parameter and perform correction so as to approach the value of the design value when the state of the quantum bit deviates from the design value. However, when Ry($\Theta''$) is applied to this, a rotation axis changes from an x-axis to a y-axis, and thus it cannot be simply returned to the original state.

In a case where Ry($\Theta''$) is set after Rx($\Theta$), it is necessary to return the quantum operations in order so as to return to the original state by setting Rx($-\Theta$) after Ry($-\Theta''$). The correction calculation is a calculation of turning $-\Delta\Theta$ when $\Delta\Theta$ is excessively turned. In order to determine how much an error occurs in the quantum operation, after a plurality of quantum operations is performed, it is necessary to confirm that the inverse quantum operation is performed to return to an original state. As a confirmation means, an inverse quantum operation of returning a certain quantum operation in order is performed, and a deviation amount is grasped by observing a deviation from a known original state.

In order to realize the correction calculation, it is desirable to have a means capable of confirming the result of the quantum operation and the result of the correction calculation during the actual operation. Therefore, it is conceivable to add a dedicated quantum circuit different from the quantum bit array 413 in order to determine whether or not it is better to perform correction from the value of the control signal parameter during the execution of the quantum operation.

That is, a quantum circuit B (the above-described dedicated quantum circuit) completely independent of a quantum circuit A that performs a desired quantum operation is simultaneously provided. The quantum circuit B is configured as a quantum circuit for calibration smaller than the quantum circuit A, and the quantum circuit B is a quantum circuit configured with a quantum bit having no interaction with the quantum bit of the quantum circuit A.

The quantum circuits A and B are arranged in the same quantum bit array and controlled by the same control signal parameter. Here, the quantum circuit B is operated in parallel with the operation of the quantum circuit A, and then the quantum state of the quantum bit of the quantum circuit B is observed, whereby the digital twin control device 103 calibrates the control signal parameter.

At this time, the quantum circuit B executes observation using a feature that the quantum circuit A is not affected. Such a quantum circuit may be realized by, for example, an example of an uncompute. This example is an example of an operation (identity operation) of performing a desired quantum operation (an operation A) using an ancilla quantum bit (an auxiliary quantum bit), then performing an inverse operation (an operation $A^{-1}$) of the operation A to return the ancilla quantum bit to an initial state, and finally returning the operation to the original state.

In this way, when starting from the initial state, performing the operation and its inverse operation and finally returning to the original initial state, it is possible to return to the initial state by performing the calculation of returning the rotation angle together with the error, and observe the ancilla quantum bits to verify the operation accuracy during the quantum operation.

In general, the quantum operation cannot observe the operation result until the operation is completed. However, as described above, by observing the spin state of the ancilla quantum bit irrelevant to the quantum operation after the uncompute, such as the example of the uncompute described here, the accuracy of the operation can be confirmed. This is because the quantum bits after the uncompute are ideally independent and are in an initial state. That is, a validity of the value of the control signal parameter can be confirmed even in the middle of the quantum operation.

On the other hand, when it is determined that the correction is not possible (step S1207: No), the digital twin control device 103 sets a flag in the uncorrectable sign bit related to the target quantum bit group and does not execute the correction calculation (step S1209). Thereafter, the process proceeds to step S1210.

In step S1210, the virtual quantum computer 102 determines whether or not the quantum operation is ended (step S1210), and if the quantum operation is not ended (step S1210: No), the program counter is incremented (step S1211), and the quantum operation of the next target quantum bit group is executed (step S1102).

After completion of the quantum operation (step S1210: Yes), the digital twin control device 103 executes steps S1110 to S1112. In step S1112, the flag of step S1209 is also stored. As a result, the digital twin operation ends. In the second digital twin operation processing procedure example, as a result of executing the quantum operation, it is possible to know whether the deviation of the quantum bit state from the ideal state is equal to or less than the design value, whether the deviation becomes equal to or less than the design value by executing the correction operation although the deviation becomes larger than the design value, or whether the quantum operation is executed after executing the correction operation and then the state becomes a state in which the correction is impossible.

As described above, in the present embodiment, a digital twin that simulates the operation of the actual quantum computer 101 becomes possible. With the digital twin, it is possible to estimate the state without observing the control result of the quantum bit 700, so that improvement in operation accuracy can be expected. Furthermore, if an appropriate correction operation can be performed on the basis of the estimation result, the operation fidelity of the quantum operation 301 is improved.

<Dashboard of Digital Twin Operation>

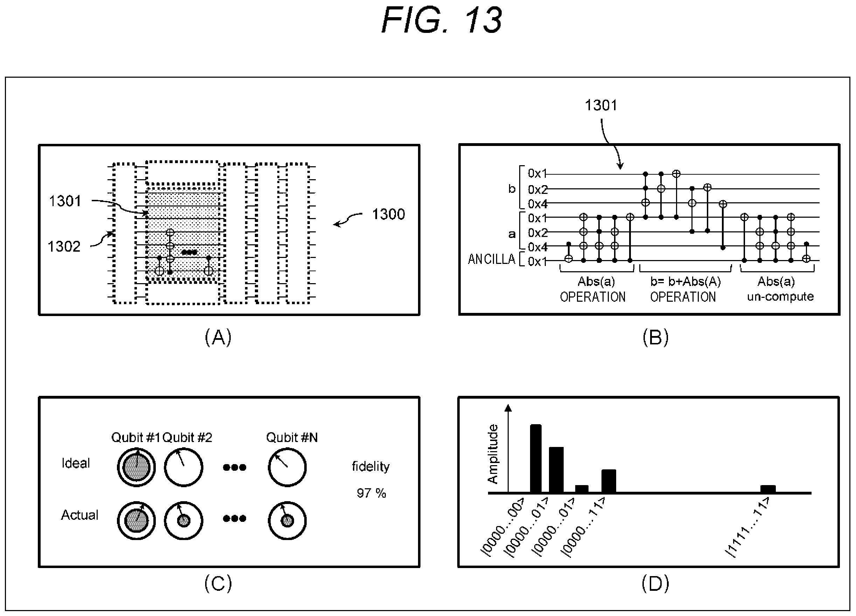

FIG. 13 is an explanatory diagram illustrating a display example of the digital twin operation. The display example of FIG. 13 is displayed on the display of the digital twin control device 103 or the host computer 400. (A) of FIG. 13 illustrates image data 1300 (hereinafter, a quantum bit array 1300) of the entire quantum bit array 413 calculated by the quantum computer. A dotted rectangle 1301 painted with dots is the target quantum bit group (hereinafter, a target quantum bit group 1301), and a dotted rectangle 1302 not painted with dots is the non-target quantum bit group (hereinafter, a non-target quantum bit group 1302).

Simulating the entire quantum bit array 1300 may exceed the hardware limit of the virtual quantum computer 102 for simulation and evaluation, or may greatly exceed the quantum operation time in terms of calculation time. Therefore, it is desirable to operate the digital twin in a part of the entire quantum bit array 1300.

(B) of FIG. 13 illustrates the target quantum bit group 1301 cut out from the quantum bit array 1300. (B) of FIG. 13 illustrates an operation of taking the absolute value of the value of the quantum bit 700 indicated as "a" and adding the absolute value to the quantum bit 700 indicated as "b", and is expressed by the following Formula (8) .

$$b = b + Abs (a) ...(8)$$

As is well known, an absolute value operation Abs(a) deletes the sign information originally included in a variable a (the negative sign is deleted to be positive). Therefore, the absolute value operation Abs(a) is not a reversible operation and cannot be realized on a quantum computer without changing. As a countermeasure, one quantum bit 700 is added (the ancilla quantum bit, the auxiliary quantum bit), and this ancilla quantum bit is caused to have negative sign information, whereby the absolute value operation Abs(a) can be a reversible operation.

The variable a then needs to be returned to the original value and needs to be uncomputed. The uncompute of the absolute value operation Abs(a) is an inverse operation of the absolute value operation Abs(a). By this operation, the information of the variable a that has been moved to the ancillary can be returned to the variable a, and the subsequent quantum operation can be continued. Here, when the ancilla quantum bit is used for the next quantum operation, the ancilla quantum bit needs to be in an initial state (for example, 10> state) by stopping entanglement with another quantum bit 700.

In the case of such an operation, since the "certain operation" and the "inverse operation" are combined, an operation error generated when the "certain operation" is executed can be corrected at the time of the inverse operation. If an operation error at the time of the "certain operation" can be estimated using the digital twin, an appropriate correction operation can be applied at the time of the "inverse operation", so that the state of the target quantum bit can be corrected to a state close to the state before operation.

When the spin state of the target quantum bit 700 can be estimated and displayed by operating the digital twin, there is an effect of facilitating grasping of the state. For example, (C) of FIG. 13 illustrates a display example in which the spin state is indicated by the ideal state (Ideal) and the actual control result (Actual). This display is called circle display, and the probability amplitude and the spin direction are displayed in the circle. By estimating the quantum bit state in this manner, it becomes possible to evaluate the operation fidelity of the quantum operation 301, and in a case where the operation fidelity is lower than expected, a decrease in the operation fidelity is prevented by executing an appropriate correction operation. (D) of FIG. 13 is a bar graph showing the probability amplitude during calculation, and the actual operation situation can be grasped.

As described above, according to the present embodiment, it is possible to acquire a highly accurate quantum calculation result at high speed and with high efficiency while using the quantum bits 700 with a low operation fidelity. In addition, when the operation of the NISQ type computer is assumed, there are effects that the accuracy of the operation result is high by the calculation of the quantum logical stage number according to the calculation fidelity realized even in an environment with a lot of noise, and the calculation time can be shortened by performing a plurality of calculations at a time.

In particular, in the case of a system in which calculation is simultaneously performed using a plurality of quantum operation blocks, voltage control for potential control between the quantum bits 700 and radio frequency application can be made common for spin control, so that there is an effect that downsizing of a control circuit, efficiency of a control sequence, and the like can be obtained.

According to the present embodiment, by increasing the quantum bit number of the quantum computer, quantum acceleration of calculation performance by the quantum computer can be realized. Therefore, the present invention can be applied to fields such as drug discovery, chemical material development, and finance.

Note that the present invention is not limited to the above-described embodiments, and includes various modifications and equivalent configurations within the spirit of the appended claims. For example, the above-described embodiments have been described in detail for easy understanding of the present invention, and the present invention is not necessarily limited to those having all the described configurations. Further, a part of the configuration of one embodiment may be replaced with the configuration of another embodiment. In addition, the configuration of another embodiment may be added to the configuration of a certain embodiment. In addition, a part of the configuration of each embodiment may be added, deleted, or replaced with another configuration.

In addition, a part or all of the above-described configurations, functions, processing units, processing means, and the like may be realized by hardware by, for example, designing with an integrated circuit, or may be realized by software by a processor interpreting and executing a program for realizing each function.

Information such as a program, a table, and a file for realizing each function can be stored in a storage device such as a memory, a hard disk, and a solid state drive (SSD), or a recording medium such as an integrated circuit (IC) card, an SD card, and a digital versatile disc (DVD).

In addition, control lines and information lines that are considered to be necessary for description are illustrated, and not all control lines and information lines necessary for implementation are illustrated. In practice, it may be considered that almost all the configurations are connected to each other.

**Claims**

1. A quantum computer system comprising:

   a virtual quantum computer that simulates an operation of an actual quantum computer that executes a quantum operation using a quantum bit group based on a predetermined parameter; and
   a control device that controls the actual quantum computer and the virtual quantum computer, wherein
   the virtual quantum computer includes an estimation unit that estimates a state of a target quantum bit in the quantum bit group by simulating the operation of the actual quantum computer, and
   the control device includes a feedback control unit that changes the parameter and transmits the changed parameter to the virtual quantum computer until a deviation between a state of the target quantum bit estimated by the estimation unit and a quantum operation result from the actual quantum computer becomes a first design value or less.

2. The quantum computer system according to claim 1, further comprising the actual quantum computer.

3. The quantum computer system according to claim 2, further comprising a plurality of the actual quantum computers and a plurality of the virtual quantum computers.

4. The quantum computer system according to claim 1, wherein the feedback control unit changes the parameter and transmits the changed parameter to the virtual quantum computer until a deviation between an estimation state and an ideal state of the target quantum bit becomes a second design value or less for each of the target quantum bits.

5. The quantum computer system according to claim 1, wherein

   the virtual quantum computer includes a calculation unit that calculates a calculation fidelity regarding a state of the target quantum bit estimated by the estimation unit, and
   the feedback control unit changes the parameter and transmits the changed parameter to the virtual quantum computer until the amount of deviation of the operation fidelity calculated by the calculation unit from an ideal state becomes equal to or less than a second design value.

6. The quantum computer system according to claim 5, wherein the quantum computer system changes the parameter and transmits the changed parameter to the virtual quantum computer until the deviation between the estimation state of the target quantum bit and the quantum operation result from the actual quantum computer becomes the first design value or less when the deviation between the estimation state of the target quantum bit and the ideal state becomes the second design value or less for each of the target quantum bits.

7. The quantum computer system according to claim 1, wherein the estimation unit estimates the state of the target quantum bit by simulating the operation of the target quantum bit using a quantum bit control model that controls the target quantum bit.

8. The quantum computer system according to claim 2, wherein

the actual quantum computer includes a quantum bit control unit that transmits a control parameter for controlling the target quantum bit as a control signal to the quantum bit group,

the estimation unit constructs a quantum bit control model for estimating a state of the target quantum bit in a case where the parameter is set and the control parameter is input, and inputs the control parameter to the quantum bit control model to simulate an operation of the actual quantum computer and estimate a state of the target quantum bit in the quantum bit group,

the feedback control unit changes the control parameter and transmits the changed control parameter to the virtual quantum computer until a deviation between an estimation state and an ideal state of the target quantum bit becomes a second design value or less for each of the target quantum bits,

the estimation unit estimates a state of a target quantum bit in the quantum bit group by inputting the changed control parameter to the quantum bit control model and simulating an operation of the actual quantum computer,

the feedback control unit changes the parameter and transmits the changed parameter to the virtual quantum computer until a deviation between the estimation state of the target quantum bit and the quantum operation result from the actual quantum computer becomes equal to or less than the first design value, and

the estimation unit updates the quantum bit control model with the changed parameter.

9. The quantum computer system according to claim 8, wherein
the actual quantum computer includes:

a first detection unit that detects a value of the control parameter from the control signal at a position closer to the quantum bit control unit than the quantum bit group between the quantum bit control unit and the quantum bit group; and

a second detection unit that detects a value of the control parameter from the control signal at a position closer to the quantum bit group than the quantum bit control unit between the quantum bit control unit and the quantum bit group,

the control device includes:

a comparison unit that compares a first detection result by the first detection unit with a second detection result by the second detection unit; and

a correction amount calculation unit that calculates a correction amount of the control parameter based on a comparison result by the comparison unit,

the feedback control unit transmits the corrected control parameter corrected by the correction amount calculated by the correction amount calculation unit to the virtual quantum computer, and

the estimation unit estimates the state of the target quantum bit in the quantum bit group by inputting the corrected control parameter to the quantum bit control model to simulate the operation of the actual quantum computer.

10. The quantum computer system according to claim 9, wherein
the actual quantum computer includes:

a third detection unit that detects a variation in a surrounding environment of the quantum bit group at a position closer to the quantum bit group than the quantum bit control unit between the quantum bit control unit and the quantum bit group, and

the correction amount calculation unit calculates the correction amount of the control parameter based on the comparison result and a third detection result by the third detection unit.

11. The quantum computer system according to claim 1, wherein the estimation unit estimates the state of the target quantum bit by simulating the operation of the target quantum bit using a learning model indicating a correlation between the target quantum bit and a control parameter for controlling the target quantum bit.

12. A method for operating a quantum computer system including a virtual quantum computer that simulates an operation of an actual quantum computer that executes a quantum operation by a quantum bit group based on a predetermined parameter, and a control device that controls the actual quantum computer and the virtual quantum computer, the method comprising:

estimating, by the virtual quantum computer, a state of a target quantum bit in the quantum bit group by simulating an operation of the actual quantum computer, and

changing, by the control device, the parameter and transmitting the changed parameter to the virtual quantum computer until a deviation between an estimation state of the target quantum bit and a quantum operation result from the actual quantum computer becomes a first design value or less.

## FIG. 1

100

103

DIGITAL TWIN CONTROL DEVICE

101 — ACTUAL QUANTUM COMPUTER

VIRTUAL QUANTUM COMPUTER (SIMULATOR) — 102

## FIG. 2

100

103

DIGITAL TWIN CONTROL DEVICE

ACTUAL QUANTUM COMPUTER

ACTUAL QUANTUM COMPUTER

VIRTUAL QUANTUM COMPUTER (SIMULATOR)

VIRTUAL QUANTUM COMPUTER (SIMULATOR)

101

101

102

102

*FIG. 3*

**103 DIGITAL TWIN CONTROL DEVICE**

- 131 VIRTUAL AND ACTUAL OPERATION RESULT COMPARISON
- 132 QUANTUM OPERATION BIT OPERATION FIDELITY DEVIATION CALCULATION
- 133 VIRTUAL PARAMETER CHANGE
- 134 ACTUAL PARAMETER CHANGE
- 135 DATABASE

QUANTUM OPERATION SIMULATION RESULT
CONTROL PARAMETER SIMULATION RESULT
FIDELITY BY SIMULATION
CONTROL PARAMETER UPDATE

CONTROL SIGNAL PARAMETER, CONTROL PARAMETER, ENVIRONMENTAL PARAMETER
QUANTUM OPERATION RESULT
CONTROL PARAMETER UPDATE

**121 VIRTUAL QUANTUM COMPUTER (SIMULATOR)**

CONTROL PARAMETER SIMULATION
- 121A CONTROL PARAMETER MONITORING
- 121B QUANTUM BIT OPERATION FIDELITY CALCULATION

122 QUANTUM OPERATION SIMULATION
- 102 / 122A GLOBAL MODEL FOR QUANTUM OPERATION QUANTUM OPERATION USING SPARSE MATRIX
- 122B PARTIALLY QUANTUM OPERATION MODEL THAT PERFORMS PARTIAL QUANTUM OPERATIONS ON QUBIT BASIS

**101 ACTUAL QUANTUM COMPUTER**

- 302 CONTROL SIGNAL PARAMETER AND CONTROL PARAMETER STATUS MONITORING
- 303 ENVIRONMENTAL PARAMETER MONITORING
- 301 QUANTUM OPERATION

26

*FIG. 4*

EP 4 390 827 A1

# FIG. 5

500

| qubit# | ΔV | ΔI | Δ tV | Δ tI | Δ RF amp | Δ RF freq | Δ tRF | Δ Rf φ | ΔTEMP | Δ Mag. Field | Δ process | Fidelity |
|--------|-----|-----|-------|-------|----------|-----------|-------|--------|-------|--------------|-----------|----------|
| 0 | 16bit | 16bit | 16bit | 16bit | 16bit | 16bit | 16bit | 16bit | 16bit | 16bit | 16bit | 16bit |
| 1 | 16bit | 16bit | 16bit | 16bit | 16bit | 16bit | 16bit | 16bit | 16bit | 16bit | 16bit | 16bit |
| | | | | | | | | | | | | |
| 127 | 16bit | 16bit | 16bit | 16bit | 16bit | 16bit | 16bit | 16bit | 16bit | 16bit | 16bit | 16bit |

501 502 503 504 505 506 507 508 509 510 511 512 513

EP 4 390 827 A1

# FIG. 6

600

| 507 | 502 | 503 | 506 | 510 | 511 | 512 |
|---|---|---|---|---|---|---|
| Δ RF freq | ΔV | ΔI | Δ RF amp | ΔTEMP | Δ Mag. Field | Δ process |
| 16bit | 16bit | 16bit | 16bit | 16bit | 16bit | 16bit |

# FIG. 7

413

# FIG. 8

START

S801 — ACQUIRE CONTROL SIGNAL PARAMETERS

S802 — CONSTRUCT QUANTUM BIT CONTROL MODEL

S803 — START ADJUSTMENT CONTROL SIGNAL PARAMETER

S804 — CHANGE CONTROL SIGNAL PARAMETER

S805 — ESTIMATE STATE OF QUANTUM BIT

S806 — COMPARE ESTIMATED STATE WITH IDEAL STATE

S807 — IS DEVIATION EQUAL TO OR LESS THAN DESIGN VALUE? — No

Yes

S808 — COMPLETE ADJUSTMENT OF CONTROL SIGNAL PARAMETER

S809 — ACQUIRE QUANTUM OPERATION RESULT

S810 — COMPARE QUANTUM OPERATION RESULT WITH ESTIMATED STATE

S811 — IS DEVIATION EQUAL TO OR LESS THAN DESIGN VALUE? — No

Yes

END

# FIG. 9

START

S901 — SET QUANTUM BIT CONTROL MODEL

S902 — CHANGE QUANTUM BIT CONTROL VARIATION MODEL

S903 — START CONTROL PARAMETER VARIATION EVALUATION

S904 — ACQUIRE CONTROL SIGNAL PARAMETER AND MEASUREMENT VALUE OF CONTROL PARAMETER

S905 — ADJUST AMOUNT OF VARIATION IN CONTROL SIGNAL PARAMETER

S906 — ESTIMATE STATE OF QUANTUM BIT

S907 — EVALUATE DEVIATION FROM QUANTUM BIT STATE ESTIMATED VALUE

S908 — IS DEVIATION EQUAL TO OR LESS THAN DESIGN VALUE?

No

Yes

END

# FIG. 10

START

S1001 — SET FITTING PARAMETER

S1002 — QUANTUM OPERATION (ONE STEP)

S1003 — EVALUATE INFLUENCE OF NOISE

S1004 — ESTIMATE STATE OF QUANTUM BIT

S1005 — CALCULATE DEVIATION FROM IDEAL STATE

S1008 — PROGRAM COUNTER +1

S1006 — IS DEVIATION EQUAL TO OR LESS THAN DESIGN VALUE?

Yes → S1007 — IS QUANTUM OPERATION ENDED?

No (from S1007 to S1008)

No (from S1006)

Yes (from S1007)

S1009 — ACQUIRE MEASURED VALUE OF QUANTUM BIT STATE

S1010 — CALCULATE DEVIATION FROM MEASURED VALUE

S1012 — UPDATE FITTING PARAMETER

S1011 — IS DEVIATION FROM MEASURED VALUE EQUAL TO OR LESS THAN DESIGN VALUE?

No → S1012

Yes → END

## FIG. 11

START

S1101 — SET CONTROL SIGNAL PARAMETER

S1102 — QUANTUM OPERATION (ONE STEP)

S1103 — EVALUATE IMPACT OF NOISE

S1104 — ESTIMATE STATE OF QUANTUM BIT

S1105 — CALCULATE DEVIATION FROM DESIGN VALUE

S1107 — PROGRAM COUNTER+1

S1106 — IS QUANTUM OPERATION FINISHED?
No → (to S1107)
Yes ↓

S1108 — IS DEVIATION EQUAL TO OR LESS THAN DESIGN VALUE?
No → S1109 — SET Warning
Yes ↓

S1110 — ACQUIRE MEASURED VALUE

S1111 — CALCULATE DEVIATION BETWEEN ESTIMATED VALUE AND MEASURED VALUE

S1112 — DETERMINE VALIDITY OF CALCULATION RESULT AND STORE VALIDITY OF CALCULATION RESULT

END

EP 4 390 827 A1

FIG. 12

START

S1101 — SET CONTROL SIGNAL PARAMETER

S1102 — QUANTUM OPERATION (ONE STEP)

S1103 — EVALUATE IMPACT OF NOISE

S1104 — ESTIMATE STATE OF QUANTUM BIT

S1105 — CALCULATE DEVIATION FROM DESIGN VALUE

S1206 — IS DEVIATION EQUAL TO OR LESS THAN DESIGN VALUE? — No / Yes

S1207 — IS CORRECTION POSSIBLE? — No / Yes

S1208 — EXECUTE CORRECTION OPERATION

S1209 — SET UNCORRECTABLE SIGN BIT

S1210 — IS QUANTUM OPERATION FINISHED? — No / Yes

S1211 — PROGRAM COUNTER+1

S1110 — ACQUIRE MEASURED VALUE

S1111 — CALCULATE DEVIATION BETWEEN ESTIMATED VALUE AND MEASURED VALUE

S1112 — DETERMINE VALIDITY OF CALCULATION RESULT AND STORE VALIDITY OF CALCULATION RESULT

END

# FIG. 13

(A)

(B)

(C)

(D)

**EP 4 390 827 A1**

## INTERNATIONAL SEARCH REPORT

| International application No. |
| --- |
| **PCT/JP2022/003885** |

**A.   CLASSIFICATION OF SUBJECT MATTER**

*G06Q 50/10*(2012.01)i; *G06N 10/00*(2022.01)i
FI:   G06N10/00; G06Q50/10

According to International Patent Classification (IPC) or to both national classification and IPC

**B.   FIELDS SEARCHED**

Minimum documentation searched (classification system followed by classification symbols)

G06Q50/10; G06N10/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X | CN 111612152 A (JINAN INSPUR HI-TECH INVESTMENT AND DEVELOPMENT CO., LTD.) 01 September 2020 (2020-09-01) paragraphs [0045]-[0122], fig. 1-4 | 1-3, 7, 11-12 |
| A | | 4-6, 8-10 |
| A | US 2021/0192114 A1 (GOOGLE LLC) 24 June 2021 (2021-06-24) entire text, all drawings | 1–12 |
| A | US 2020/0274554 A1 (PRESIDENT AND FELLOWS OF HARVARD COLLEGE) 27 August 2020 (2020-08-27) entire text, all drawings | 1-12 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 March 2022** | **12 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/003885**

| Patent document cited in search report | | | Publication date (day/month/year) | Patent family member(s) | | | Publication date (day/month/year) |
|---|---|---|---|---|---|---|---|
| CN | 111612152 | A | 01 September 2020 | (Family: none) | | | |
| US | 2021/0192114 | A1 | 24 June 2021 | WO | 2019/078907 | A1 | |
| | | | | entire text, all drawings | | | |
| | | | | CN | 111247538 | A | |
| | | | | entire text, all drawings | | | |
| US | 2020/0274554 | A1 | 27 August 2020 | WO | 2019/055843 | A1 | |
| | | | | entire text, all drawings | | | |
| | | | | CA | 3075897 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021132823 A

**Non-patent literature cited in the description**

- **FRANK ARUTE et al.** Quantum supremacy using a programmable superconducting processor. *Nature,* October 2019, vol. 574 (24), 505-510
- **AUSTIN G. FOWLER et al.** *Surface codes: Towards practical large-scale quantum computation,* 27 October 2012
- **JOHN PRESKILL.** *Quantum Computing in the NISQ era and beyond,* 31 July 2018
- **D. M. ZAJAC et al.** Quantum CNOT Gate for Spins in Silicon. *Science,* 2017